# FASCICULE DE BREVET EUROPEEN

(11) **EP 3 803 299 B1**
(45) Date de publication et mention de la délivrance du brevet: **13.09.2023**
(21) Numéro de dépôt: 19739674.0
(22) Date de dépôt: 28.05.2019
(51) Int. Cl.: G01J 5/80, G01J 5/02, G01J 5/04, G01J 5/06, G01J 5/20

(54) **SYSTEME DE DETECTION A PIXEL SENSIBLE COMPORTANT UN DETECTEUR THERMIQUE ET UN DISPOSITIF DE COMPENSATION**
SENSITIVES PIXELBASIERTES DETEKTIONSSYSTEM MIT EINEM THERMISCHEN DETEKTOR UND EINER KOMPENSATIONSVORRICHTUNG
SENSITIVE PIXEL BASED DETECTION SYSTEM COMPRISING A THERMAL DETECTOR AND A COMPENSATION DEVICE

(30) Priorité: 30.05.2018 FR 1854635
(43) Date de publication de la demande: 14.04.2021
(73) Titulaire: COMMISSARIAT À L'ÉNERGIE ATOMIQUE ET AUX ÉNERGIES ALTERNATIVES, 75015 Paris (FR)
(72) Inventeur: ALIANE, Abdelkader, 38054 Grenoble cedex 09 (FR); CHARPENTIER, Alain, 38054 Grenoble cedex 09 (FR)
(74) Mandataire: Brevalex
(86) Numéro de dépôt international: PCT/FR2019/051231
(87) Numéro de publication internationale: WO 2019/229353

(56) Documents cités:
- EP-A1- 3 093 633
- WO-A1-01/09948
- FR-A1- 3 056 292
- US-A1- 2012 235 045
- US-A1- 2013 235 210

## Description

### DOMAINE TECHNIQUE

Le domaine de l'invention est celui des dispositifs de détection de rayonnement électromagnétique comportant au moins un détecteur thermique à membrane absorbante thermiquement isolée du substrat, et au moins un dispositif de compensation. L'invention s'applique notamment au domaine de l'imagerie infrarouge ou térahertz, de la thermographie, voire de la détection de gaz.

### ÉTAT DE LA TECHNIQUE ANTÉRIEURE

Un système de détection de rayonnement électromagnétique peut comporter une matrice de pixels sensibles contenant chacun un détecteur thermique à une membrane absorbante thermiquement isolée du substrat. La membrane absorbante comporte un absorbeur du rayonnement électromagnétique à détecter associé à un transducteur thermométrique dont une propriété électrique varie en intensité en fonction de son échauffement.

La température du transducteur thermométrique étant cependant grandement dépendante de son environnement, la membrane absorbante est habituellement isolée thermiquement du substrat et du circuit de lecture, lequel est disposé dans le substrat. Ainsi, la membrane absorbante est généralement suspendue au-dessus du substrat par des piliers d'ancrage, et en est isolée thermiquement par des bras de maintien et d'isolation thermique. Ces piliers d'ancrage et bras d'isolation présentent également une fonction électrique en assurant la connexion électrique de la membrane suspendue au circuit de lecture disposé dans le substrat.

Cependant, lors de la lecture d'un signal électrique du détecteur thermique lors de l'absorption du rayonnement électromagnétique, la part utile du signal de réponse du transducteur thermométrique associée à son échauffement induit par l'absorption du rayonnement électromagnétique à détecter reste faible, par exemple moins de 10%, voire de 1% du signal de réponse. Aussi, le système de détection comporte habituellement un dispositif de compensation destiné à mesurer la part non utile du signal électrique, également appelé mode commun, associée à l'environnement du détecteur thermique, laquelle est ensuite soustraite au signal de réponse pour en déduire la part utile.

Le système de détection, en particulier lorsqu'il fonctionne en mode *'rolling shutter',* peut alors comporter une matrice de pixels sensibles, et un dispositif de compensation et un intégrateur de type CTIA disposés au pied de chaque colonne de pixels. En fonctionnement, la matrice de pixels sensibles est lue ligne par ligne. L'intégrateur reçoit le signal de réponse I_{d} du détecteur thermique et lui soustrait le signal électrique I_{c} de mode commun mesuré par le dispositif de compensation correspondant. Ainsi, la part non utile contenue dans le signal de réponse I_{d} est compensée par le mode commun I_{c}. On obtient ainsi la part utile I_{d}-I_{c} associée à l'absorption du rayonnement électromagnétique à détecter, sans qu'il soit nécessaire de réguler spécifiquement la température du substrat.

La figure 1 illustre un exemple de dispositif de compensation 30 tel que décrit dans le document EP2840370. Le dispositif de compensation 30 présente une structure similaire à celle d'un détecteur thermique, la membrane absorbante 53 étant cependant thermalisée au substrat de lecture 10 par l'intermédiaire de tiges 2 reliant la membrane 53 au substrat de lecture 10 dans le but d'assurer un court-circuit thermique. De plus, la membrane absorbante 53 est rendue optiquement insensible au rayonnement électromagnétique incident.

Cependant, il existe un besoin de disposer d'un système de détection ayant un facteur de remplissage augmenté, ce facteur étant défini comme le rapport de la surface de la membrane absorbante sur la surface totale du pixel sensible, dans un plan parallèle au plan du substrat, tout en tenant compte de la présence du dispositif de compensation. Il existe également un besoin de disposer d'un système de détection présentant une détermination plus précise de la part utile du signal de réponse fournie par chaque détecteur thermique.

Les documents JPH04355331 et EP3093633 décrivent des dispositifs de compensation de détecteurs thermiques pyroélectriques, c'est-à-dire dont le transducteur thermométrique est une capacité. Ces dispositifs de compensation comportent une capacité et sont destinés à compenser le bruit piézoélectrique et non pas le mode commun. Pour cela, la capacité de compensation est généralement isolée thermiquement du substrat pour présenter des propriétés identiques à celles de la capacité de détection (comme l'indique explicitement le document EP3093633), mais ne reçoit pas la lumière incidente. En effet, il n'est pas possible de dissocier l'effet pyroélectrique d'un effet piézoélectrique pour la plupart des matériaux utilisés dans les détecteurs pyroélectriques, ce qui pose notamment problème dès lors qu'il y a des vibrations mécaniques. Notons de plus que les fluctuations de température du fait de l'absorption du flux lumineux incident génèrent également des charges pyroélectriques et piézoélectriques. Pour éliminer ce bruit piézoélectrique, il est connu de connecter en série un dispositif pyroélectrique de compensation en tout point identique au détecteur pyroélectrique, mais polarisé en inverse.

D'autres systèmes de détection d'un rayonnement électromagnétique connus sont illustrés par les documents WO0109948, US20130235210, US20120235045 et FR3056292.

### EXPOSÉ DE L'INVENTION

L'invention a pour objectif de remédier au moins en partie aux inconvénients de l'art antérieur. Pour cela, l'objet de l'invention est un système de détection d'un rayonnement électromagnétique, comportant :
∘ un substrat dit de lecture ;
∘ au moins un détecteur thermique, comportant :
   - une membrane absorbante du rayonnement électromagnétique, thermiquement isolée vis-à-vis du substrat de lecture, et comportant un transducteur thermométrique de détection ;
   - un réflecteur du rayonnement électromagnétique, disposé entre la membrane absorbante et le substrat de lecture ;
∘ au moins un dispositif de compensation, comportant un transducteur thermométrique de compensation, en contact thermique avec le substrat de lecture ;
∘ un circuit de lecture, disposé dans le substrat de lecture, et adapté à appliquer un signal électrique au détecteur thermique et au dispositif de compensation.

Selon l'invention, le transducteur thermométrique de compensation est disposé entre le réflecteur et le substrat de lecture, et situé en regard du réflecteur de manière à être optiquement insensible du rayonnement électromagnétique incident.

De plus, les transducteurs thermométrique et de compensation sont choisis parmi une diode à jonction pn ou pin, un transistor à effet de champ, ou un matériau thermistance. L'invention porte ainsi sur les détecteurs thermiques dont le dispositif de compensation permet de soustraire le mode commun au signal mesuré. Pour cela, le transducteur thermométrique est en contact thermique avec le substrat de lecture. L'invention se distingue ainsi, par sa structure et par le but du dispositif de compensation, des exemples de détecteurs pyroélectriques mentionnés précédemment dans lesquels le dispositif de compensation est destiné à supprimer le bruit piézoélectrique du signal mesuré et non pas le mode commun.

Certains aspects préférés mais non limitatifs de ce système de détection sont les suivants.

Le réflecteur peut recouvrir le transducteur thermométrique de compensation. Autrement dit, il présente une étendue surfacique, dans un plan parallèle au plan principal du substrat de lecture, adaptée à recouvrir le transducteur thermométrique de compensation.

Le transducteur thermométrique de compensation peut être au contact du substrat de lecture par le biais d'au moins une couche isolante réalisée en un matériau diélectrique présentant une conductivité thermique sensiblement égale à celle du substrat de lecture.

Le transducteur thermométrique de compensation peut être entouré, dans un plan parallèle au plan principal du substrat de lecture, par une couche isolante réalisée en un matériau diélectrique présentant une conductivité thermique sensiblement égale à celle du substrat de lecture.

Dans ce cas, le réflecteur peut reposer sur une couche isolante réalisée en un matériau diélectrique présentant une conductivité thermique sensiblement égale à celle du substrat de lecture et qui recouvre le transducteur thermométrique de compensation.

Les transducteurs thermométriques de compensation et de détection peuvent être structurellement identiques.

Les transducteurs thermométriques de compensation et de détection peuvent être connectés au circuit de lecture par l'intermédiaire de plots conducteurs s'étendant de manière sensiblement orthogonale au plan principal du substrat de lecture,
∘ les plots conducteurs de connexion du transducteur thermométrique de détection étant sensiblement coaxiaux avec les plots conducteurs de connexion du transducteur thermométrique de compensation,
∘ les plots conducteurs de connexion du transducteur thermométrique de détection étant connectés électriquement à des piliers d'ancrage assurant une suspension de la membrane absorbante par au moins un bras de connexion latérale s'étendant dans un plan parallèle au plan principal du substrat de lecture.

Les plots conducteurs de connexion du transducteur thermométrique de détection peuvent présenter chacun une hauteur sensiblement égale à celle du plot conducteur coaxial de connexion du transducteur thermométrique de compensation.

Les transducteurs thermométriques de compensation et de détection peuvent être des transistors à effet de champ comportant chacun une portion semiconductrice formant une source, un canal et un drain, et une couche conductrice formant une grille, laquelle est séparée du canal par une couche isolante formant un oxyde de grille, chaque grille étant située, par rapport à la portion semiconductrice correspondante, du côté du substrat de lecture.

Les transducteurs thermométriques de compensation et de détection peuvent être connectés au circuit de lecture par l'intermédiaire de plots conducteurs s'étendant de manière sensiblement orthogonale au plan principal du substrat de lecture, et connectant chacun une source, un drain ou une grille.

L'invention porte également sur un procédé de fabrication d'un système de détection selon l'une quelconque des caractéristiques précédentes, les transducteurs thermométriques de compensation et de détection étant des matériaux thermistances, comportant les étapes suivantes :
- réalisation d'un substrat de lecture ;
- réalisation, à partir d'une face supérieure du substrat de lecture, du dispositif de compensation ;
- réalisation, à partir d'une face supérieure du dispositif de compensation, du réflecteur ;
- réalisation, à partir d'une face supérieure du réflecteur, de la membrane absorbante du détecteur thermique.

L'invention porte également sur un procédé de fabrication d'un système de détection selon l'une quelconque des caractéristiques précédentes, les transducteurs thermométriques de compensation et de détection étant des diodes à jonction pn ou pin ou des transistors à effet de champ, comportant les étapes suivantes :
- réalisation du substrat de lecture ;
- réalisation d'un substrat fonctionnalisé dit de compensation, comportant le transducteur thermométrique de compensation ;
- fixation par collage du substrat fonctionnalisé de compensation sur le substrat de lecture ;
- réalisation d'un substrat fonctionnalisé dit de détection, comportant le transducteur thermométrique de détection ;
- fixation par collage du substrat fonctionnalisé de détection sur la structure préalablement obtenue.

Les substrats de lecture, de compensation, et de détection, peuvent être fixés deux à deux, par collage mixte, au niveau de faces desdits substrats fonctionnalisés définies par au moins une surface d'un matériau diélectrique, et au moins une surface d'un matériau métallique.

L'invention porte également sur un procédé de fabrication d'un système de détection selon l'une quelconque des caractéristiques précédentes, le transducteur thermométrique de compensation étant un matériau thermistance, et le transducteur thermométrique de détection étant une diode à jonction pn ou pin ou un transistor à effet de champ, comportant les étapes suivantes :
- réalisation du substrat de lecture ;
- réalisation, à partir d'une face supérieure du substrat de lecture, du dispositif de compensation ;
- réalisation, à partir d'une face supérieure du dispositif de compensation, d'une couche intercalaire d'espacement optique comportant le réflecteur ;
- réalisation d'un substrat fonctionnalisé dit de détection, comportant le transducteur thermométrique de détection ;
- fixation par collage du substrat fonctionnalisé de détection sur la structure préalablement obtenue.

### BRÈVE DESCRIPTION DES DESSINS

D'autres aspects, buts, avantages et caractéristiques de l'invention apparaîtront mieux à la lecture de la description détaillée suivante de formes de réalisation préférées de celle-ci, donnée à titre d'exemple non limitatif, et faite en référence aux dessins annexés sur lesquels :
la figure 1, déjà décrite, est une vue schématique et partielle, en coupe transversale, d'un dispositif de compensation selon un exemple de l'art antérieur ;
la figure 2 est une vue schématique et partielle, en coupe transversale, d'un système de détection selon un premier mode de réalisation ;
les figures 3A à 3F illustrent différentes étapes d'un procédé de fabrication du système de détection selon le premier mode de réalisation ;
la figure 4 est une vue schématique et partielle, en coupe transversale, d'un système de détection selon un deuxième mode de réalisation ;
les figures 5A à 5H illustrent différentes étapes d'un procédé de fabrication du système de détection selon le deuxième mode de réalisation.

### EXPOSÉ DÉTAILLÉ DE MODES DE RÉALISATION PARTICULIERS

Sur les figures et dans la suite de la description, les mêmes références représentent les éléments identiques ou similaires. De plus, les différents éléments ne sont pas représentés à l'échelle de manière à privilégier la clarté des figures. Par ailleurs, les différents modes de réalisation et variantes ne sont pas exclusifs les uns des autres et peuvent être combinés entre eux. Sauf indication contraire, les termes « sensiblement », « environ », « de l'ordre de » signifient à 10% près, et de préférence à 5% près. Par ailleurs, l'expression « comportant un » doit être comprise comme « comportant au moins un », sauf indication contraire.

L'invention porte sur un système de détection d'un rayonnement électromagnétique, par exemple un rayonnement infrarouge ou térahertz. Le système de détection peut ainsi être particulièrement adapté à détecter un rayonnement infrarouge de la gamme LWIR (*Long Wavelength Infrared*, en anglais) dont la longueur d'onde est comprise entre 8µm et 14µm environ. Il comporte en effet une cavité interférentielle quart d'onde formée entre une membrane absorbante et un réflecteur, permettant ainsi de maximiser l'absorption du rayonnement infrarouge à détecter.

Le système de détection comporte au moins un pixel sensible, et de préférence une matrice de pixels sensibles. Un pixel sensible est formé d'un détecteur thermique destiné à absorber le rayonnement électromagnétique d'intérêt, et d'un dispositif de compensation destiné à mesurer le mode commun du pixel sensible. Le dispositif de compensation peut également être appelé dispositif de référence ou dispositif d'ébasage. Le dispositif de détection et le dispositif de compensation reposent sur un substrat fonctionnalisé contenant le circuit de commande et de lecture.

Le détecteur thermique comporte un transducteur thermométrique dit de détection, situé dans une membrane absorbante thermiquement isolée de substrat. Par transducteur thermométrique, on entend ici un élément présentant une propriété électrique variant avec son échauffement. Un tel transducteur thermométrique peut être une thermistance formée par exemple d'une couche d'oxyde de vanadium ou de titane, ou d'une couche de silicium amorphe, une diode (jonction pn ou pin), voire un transistor à effet de champ et à structure métal - oxyde - semiconducteur (MOSFET).

Le dispositif de compensation comporte un transducteur thermométrique dit de compensation, lequel est thermalisé au substrat, c'est-à-dire qu'il est en contact thermique avec celui-ci. En d'autres termes, le transducteur thermométrique de compensation présente une température sensiblement égale à celle du substrat et donc à celle du circuit de lecture.

Selon l'invention, le transducteur thermométrique de compensation est situé sous le réflecteur du détecteur thermique, c'est-à-dire entre le réflecteur et le substrat. Il est, plus précisément, disposé en regard du réflecteur de manière à être optiquement insensible au rayonnement électromagnétique à détecter, tout en présentant une thermalisation au substrat améliorée.

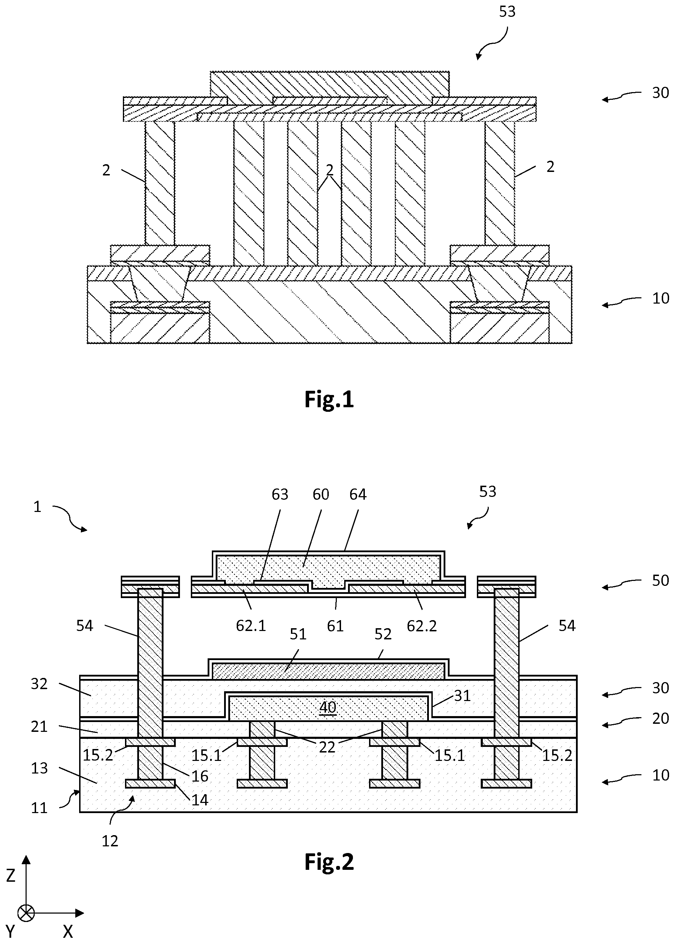

La figure 2 est une vue en coupe transversale, schématique et partielle, d'un système de détection 1 selon un premier mode de réalisation. Dans cet exemple, les transducteurs thermométriques de compensation 40 et de détection 60 sont réalisés à base d'un matériau thermistance. Ce système de détection 1 peut fonctionner tant en mode de lecture ligne par ligne (*rolling shutter,* en anglais) qu'en mode de lecture simultanée des pixels sensibles (*snapshot,* en anglais). Il fonctionne de préférence en mode *rolling shutter* notamment du fait que les courants électriques associés à la lecture du détecteur thermique 50 sont généralement de l'ordre du microampère.

On définit ici et pour la suite de la description un repère direct tridimensionnel orthogonal (X,Y,Z), où le plan (X,Y) est sensiblement parallèle au plan principal du substrat de lecture 10 du système de détection 1, et où l'axe Z est orienté suivant une direction sensiblement orthogonale au plan principal du substrat de lecture 10 et orientée vers la membrane absorbante 53. Dans la suite de la description, les termes « inférieur » et « supérieur » s'entendent comme étant relatifs à un positionnement croissant lorsqu'on s'éloigne du substrat suivant la direction +Z.

Le système de détection 1 comprend un substrat fonctionnalisé 10, dit substrat de lecture, réalisé dans cet exemple à base de silicium, comportant un circuit électronique 12 permettant la commande et la lecture du détecteur thermique 50 et du dispositif de compensation 30.

Le circuit de lecture 12 se présente ici sous la forme d'un circuit intégré CMOS situé dans un substrat support 11. Il comporte des portions 14, 15 de lignes conductrices, par exemple métalliques, séparées les unes des autres par un matériau diélectrique 13, par exemple un matériau minéral à base de silicium tel qu'un oxyde de silicium SiOₓ, un nitrure de silicium SiNₓ, ou leurs alliages. Il peut également comporter des éléments électroniques actifs (non représentés), par exemple des diodes, transistors, condensateurs, résistances..., connectés par des interconnexions électriques au détecteur thermique et au dispositif de compensation d'une part, et à un plot de connexion (non représenté) d'autre part, ce dernier étant destiné à relier électriquement le système de détection 1 à un dispositif électronique externe.

Le substrat de lecture 10 présente ici une face supérieure 10a formée notamment par une surface d'une couche isolante inter-métal 13 et une surface de portions conductrices 15 du dernier niveau d'interconnexion électrique, ces portions conductrices 15 étant destinées à connecter le détecteur thermique 50 et le dispositif de compensation 30 au circuit de lecture 12.

A titre illustratif, les portions conductrices 14, 15 et les vias conducteurs 16 peuvent être réalisés, par exemple, en cuivre, en aluminium ou en tungstène. Le cuivre ou le tungstène peut éventuellement être situé entre des sous-couches en nitrure de titane, de tantale ou autre. La ou les couches isolantes inter-métal 13 peuvent être réalisées en un matériau minéral à base de silicium, par exemple un oxyde de silicium SiOₓ ou un nitrure de silicium SiNₓ, voire en un alliage à base d'oxyde de silicium présentant une faible permittivité relative, tel que du SiOF, du SiOC, du SiOCH, etc...

Le système de détection 1 peut comporter une couche intercalaire de connexion 20 formée d'une couche isolante 21 réalisée en au moins un matériau diélectrique, par exemple un oxyde de silicium, et de plots conducteurs 22 destinés à assurer la connexion électrique entre le transducteur de compensation 40 et les portions conductrices 15.1. Les plots conducteurs 22 sont traversants et débouchent sur les deux faces opposées de la couche intercalaire 20. La couche intercalaire 20 est en outre traversée par des piliers d'ancrage 54 assurant la suspension de la membrane absorbante 53, lesquels piliers d'ancrage 54 sont en contact électrique avec les portions conductrices 15.2. La couche isolante 21 présente, de préférence, une conductivité thermique sensiblement égale à celle du substrat de lecture 10, de manière à améliorer la thermalisation du transducteur de compensation 40 à ce dernier.

Le dispositif de compensation 30 comporte un transducteur thermométrique de compensation 40, ici formée d'une portion d'un matériau thermistance tel que le silicium amorphe, un oxyde de vanadium ou de titane, ou tout autre matériau équivalent. Le transducteur de compensation 40 est au contact, en deux extrémités suivant le plan XY, des plots conducteurs 22 de manière à permettre sa polarisation électrique par le circuit de lecture 12. Il est ici revêtu d'une couche mince de protection 31 (facultative) qui s'étend entièrement sur la couche intercalaire 20 et le transducteur de compensation 40. Une couche isolante d'encapsulation 32, réalisée en un matériau diélectrique tel qu'un oxyde de silicium, revêt la couche mince de protection 31 et recouvre donc le transducteur de compensation 40 et la couche intercalaire 20. Elle présente une face supérieure de préférence sensiblement plane. La couche isolante 32 présente, de préférence, une conductivité thermique sensiblement égale à celle du substrat de lecture 12 et en particulier aux couches supérieures du substrat de lecture 10, par exemple de l'ordre de 130W/m.K qui est la conductivité thermique du silicium, de manière à améliorer la thermalisation du transducteur de compensation 40 à ce dernier.

Ainsi, le transducteur de compensation 40 est situé dans le pixel sensible et non pas hors de celui-ci. Il est électriquement connecté au circuit de lecture 12, et présente une thermalisation améliorée au substrat de lecture 10. En d'autres termes, il est porté à une température sensiblement égale à une température locale du substrat de lecture 10. La température locale est ici la température du substrat de lecture 10 au niveau du pixel sensible concerné. La thermalisation est encore améliorée lorsque le transducteur de compensation 40 est encapsulé dans des couches isolantes 21 et 32 présentant une conductivité thermique sensiblement égale à celle du substrat de lecture 10.

Dans cet exemple, le transducteur de compensation 40 est polarisé via des portions conductrices 15.1 dédiées, distinctes de celles 15.2 destinées à polariser le transducteur de détection 60. En variante, l'une des portions conductrices 15 peut être commune pour appliquer un même potentiel électrique au transducteur de compensation 40 et au transducteur de détection 60.

Par ailleurs, le dispositif de compensation 30, et en particulier son transducteur de compensation 40, est avantageusement dimensionné de sorte qu'il présente des propriétés géométriques sensiblement identiques à celles du détecteur thermique 50 et présente une bonne conductivité thermique vers le substrat 10, et une transparence au rayonnement infrarouge. Ce dispositif de compensation permet de réduire l'échauffement du bolomètre lors de la polarisation et diminue la dépendance du système à la température ambiante.

Le détecteur thermique 50 comporte ici un réflecteur 51 et une membrane absorbante 53 qui définissent ensemble une cavité optique interférentielle quart d'onde, permettant ainsi de maximiser l'absorption du rayonnement électromagnétique à détecter par la membrane absorbante 53.

Le réflecteur 51 est formé d'une portion de matériau réflecteur, par exemple métallique, reposant sur la couche isolante d'encapsulation 32 du dispositif de compensation 30. Il est disposé de manière à rendre le transducteur de compensation 40 insensible au rayonnement électromagnétique incident. Ainsi, il est situé en regard, suivant l'axe Z, du transducteur de compensation 40, et présente de préférence une surface, dans le plan XY, sensiblement égale ou supérieure à celle du transducteur de compensation 40. Il est ici revêtu d'une couche mince d'arrêt de gravure 52 qui s'étend entièrement sur la couche isolante d'encapsulation 32 et sur le réflecteur 51. Cette couche d'arrêt de gravure 52 est notamment requise pour protéger les couches isolantes 13, 21, 32 sous-jacentes réalisées par exemple en oxyde de silicium, lors de la suspension de la membrane absorbante 53 quand celle-ci est effectuée par gravure humide d'une couche sacrificielle minérale. En variante, la couche d'arrêt de gravure 52 peut s'étendre continûment sur la face supérieure de la couche isolante d'encapsulation 32, et peut alors être revêtue localement par le réflecteur 51.

Le détecteur thermique 50 comporte une membrane absorbante 53, suspendue au-dessus du substrat de lecture 10 et du réflecteur 51 par des piliers d'ancrage 54, et thermiquement isolée du substrat de lecture 10 par des bras de maintien (non représentés). La membrane absorbante 53 comporte un absorbeur du rayonnement électromagnétique à détecter associé à un transducteur thermométrique de détection 60.

La membrane absorbante 53 est ici classiquement formée d'un empilement d'une couche isolante inférieure 61 réalisée en un matériau diélectrique, de deux électrodes 62.1, 62.2 électriquement isolées l'une de l'autre par un espacement latéral, d'une couche isolante intermédiaire 63 réalisée en un matériau diélectrique et recouvrant les électrodes 62.1 62.2 et l'espacement latéral, hormis en deux ouvertures débouchant sur les électrodes 62.1, 62.2, une portion d'un matériau thermistance 60, par exemple du silicium amorphe ou un oxyde de vanadium ou de titane. La portion thermistance 60 est au contact des deux électrodes 62.1, 62.2 via les ouvertures. Une couche isolante supérieure 64 recouvre la portion thermistance 60. L'absorbeur est ici formé par les électrodes 62.1, 62.2, lesquelles sont réalisées en au moins un matériau métallique.

La membrane absorbante 53 est ici suspendue au-dessus du réflecteur 51 par les piliers d'ancrage 54, qui s'étendent jusqu'aux portions conductrices 15.2. La distance suivant l'axe Z entre la membrane absorbante 53 et le réflecteur 51 est adaptée de manière à former la cavité interférentielle quart d'onde.

Ainsi, le système de détection 1 comporte au moins un pixel sensible contenant un détecteur thermique 50 et un dispositif de compensation 30 agencés mutuellement de manière verticale suivant l'axe Z. L'agencement vertical concerne plus précisément la membrane absorbante 53 contenant le transducteur de détection 60, le réflecteur 51, et le transducteur de compensation 40. Ainsi, le facteur de remplissage est particulièrement réduit dans la mesure où le dispositif de compensation 30 n'occupe sensiblement pas de surface supplémentaire que celle déjà occupée par le détecteur thermique 50.

De plus, par le fait que le transducteur de compensation 40 est disposé entre le réflecteur 51 et le substrat de lecture 10, et en étant en contact thermique avec celui-ci, il est ainsi rendu insensible au rayonnement électromagnétique incident tout en présentant une thermalisation améliorée au substrat de lecture 10. La thermalisation est d'autant plus efficace que le transducteur de compensation 40 est situé au plus près du substrat de lecture 10. De plus, il repose de préférence sur une couche isolante 21 qui est en contact avec le substrat de lecture 10, et présente une conductivité thermique sensiblement égale à celle de ce dernier. De plus, il est de préférence encapsulé dans une couche isolante 32 présentant également une conductivité thermique sensiblement égale à celle du substrat de lecture 10.

Par ailleurs, le transducteur de compensation 40 étant situé en regard du transducteur de détection 60 dans le pixel sensible et présentant une thermalisation améliorée au substrat de lecture 10, il présente donc une température sensiblement égale à la température locale du substrat de lecture 10 dans le pixel sensible, et permet donc de mesurer le mode commun effectif du pixel sensible concerné. La part utile du signal électrique fourni par le détecteur thermique 50 peut alors être déterminée avec une grande précision, dans la mesure où la part non utile est compensée par le mode commun effectif du pixel sensible, lequel est efficacement mesuré par le dispositif de compensation.

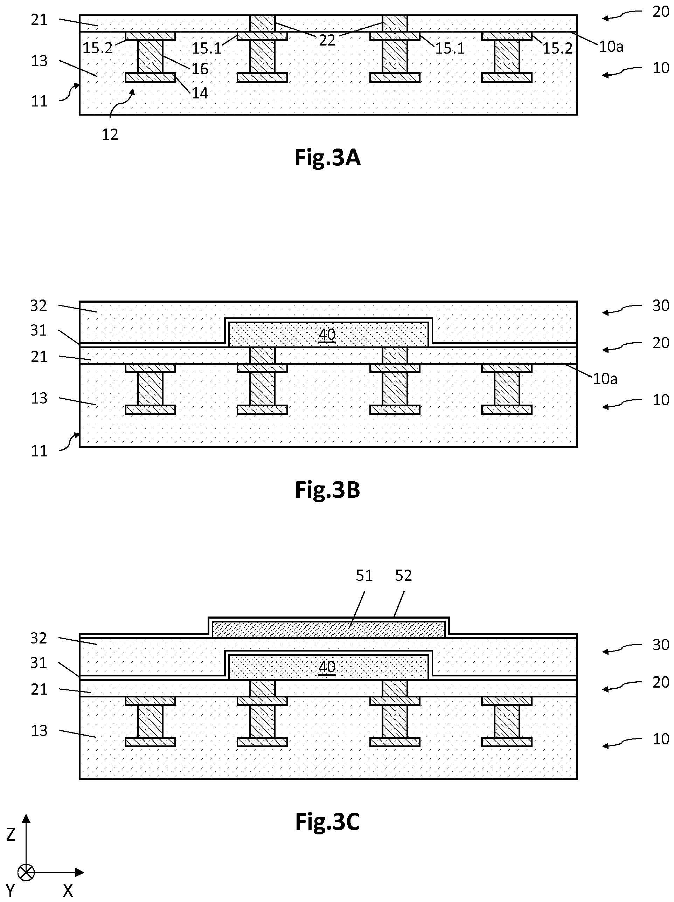

Les figures 3A à 3F illustrent différentes étapes d'un procédé de fabrication du système de détection 1 selon le premier mode de réalisation. Dans le cadre de ce procédé, le dispositif de compensation 30 ainsi que le détecteur thermique 50 sont réalisés par des étapes de dépôt, photolithographie et gravure, directement à partir du substrat de lecture 10 (procédé dit *above IC,* en anglais). Autrement dit, il s'agit d'un procédé comportant une séquence continue d'opérations de réalisation microélectronique effectuées sur un unique substrat support 11. Le procédé ne comporte donc pas d'étapes de report et de collage de substrats fonctionnalisés les uns sur les autres, à la différence du procédé de fabrication selon le deuxième mode de réalisation décrit plus loin.

En référence à la fig.3A, on réalise un substrat fonctionnalisé dit de lecture 10, formé d'un substrat support 11 contenant le circuit de lecture 12 adapté à commander et lire le dispositif de compensation et le détecteur thermique. Le circuit de lecture 12 comporte ainsi des portions conductrices 15.1, 15.2 qui affleurent la face supérieure 10a du substrat de lecture 10, laquelle est sensiblement plane. Les portions conductrices 14, 15 et les vias conducteurs 16 peuvent être réalisés en cuivre, en aluminium et/ou en tungstène, entre autres, par exemple au moyen d'un procédé damascène dans lequel on remplit des tranchées réalisées dans la couche isolante inter-métal 13. L'affleurement des portions conductrices 15.1, 15.2 au niveau de la face supérieure 10a du substrat de lecture 10 peut être obtenu par une technique de planarisation mécano-chimique (CMP).

On réalise ensuite le dispositif de compensation 30 directement à partir de la face supérieure 10a du substrat de lecture 10. Pour cela, on peut réaliser au préalable une couche intercalaire de connexion 20. Ainsi, une couche isolante 21 en un matériau diélectrique, par exemple un oxyde de silicium, est déposée de manière à recouvrir continûment la face supérieure 10a du substrat de lecture 10. Le matériau diélectrique est avantageusement choisi de manière à présenter une conductivité thermique sensiblement égale à celle du substrat de lecture 10, dans le but d'améliorer la thermalisation du transducteur de compensation. Des plots conducteurs 22 sont ensuite formés au travers de la couche isolante 21 de manière à déboucher sur les portions conductrices 15.1 de polarisation du dispositif de compensation. Les plots conducteurs 22 peuvent être formés par dépôt CVD d'une couche mince d'accroche, par exemple en TiN, suivi d'un dépôt de cuivre par électrolyse. Une étape de planarisation mécano-chimique permet d'obtenir l'affleurement des plots conducteurs 22 au niveau de la face supérieure plane 20a de la couche intercalaire 20.

En référence à la fig.3B, on réalise ensuite le transducteur de compensation 40, ici sous la forme d'une portion d'un matériau thermistance adéquat, par dépôt, photolithographie puis gravure. Le matériau thermistance peut être du silicium amorphe, un oxyde de vanadium, ou tout autre matériau équivalent. La portion thermistance 40 peut être dimensionnée, notamment en épaisseur, de manière à présenter des propriétés électriques et/ou thermiques prédéterminées, de préférence sensiblement identiques à celles du détecteur thermique.

Le transducteur de compensation 40 peut ensuite être revêtu d'une couche de protection 31 permettant de préserver ses propriétés lors de l'étape ou des étapes suivantes. Cette couche de protection 31 peut être déposée de manière conforme et être formée en un matériau diélectrique choisi parmi un oxyde d'aluminium (par ex. Al₂O₃) ou de hafnium (par ex. HfO₂), un nitrure d'Aluminium AlN, ou autre.

Une couche isolante d'encapsulation 32 est ensuite déposée de manière à recouvrir le transducteur de compensation 40 et la couche intercalaire 20. La couche isolante d'encapsulation 32 peut être formée en un matériau diélectrique, par exemple un oxyde de silicium, et présente de préférence une face supérieure sensiblement plane. Le matériau diélectrique est avantageusement choisi de manière à présenter une conductivité thermique sensiblement égale à celle du substrat de lecture 10, et en particulier aux couches supérieures du substrat 10, par exemple de l'ordre de 130W/m.K.

En référence à la fig.3C, on réalise ensuite le réflecteur 51 du détecteur thermique, ici sous la forme d'une portion en au moins un matériau métallique. Le réflecteur 51 est formé par dépôt, photolithographie puis gravure. Le matériau métallique peut être choisi parmi le cuivre, l'aluminium, le platine, l'or etc. Le réflecteur 51 est situé en regard du transducteur de compensation 40 suivant l'axe Z et présente une surface dans le plan XY sensiblement égale voire supérieure à celle du transducteur de compensation 40. Il est disposé de manière à rendre optiquement insensible ce dernier vis-à-vis du rayonnement électromagnétique incident.

On peut ensuite déposer une couche d'arrêt de gravure 52 de manière à recouvrir le réflecteur 51 et la couche isolante d'encapsulation 32. Cette couche d'arrêt de gravure 52 est réalisée en un matériau sensiblement inerte à une gravure chimique mise en oeuvre ultérieurement pour supprimer la ou les couches sacrificielles minérales, telle qu'une gravure chimique en milieu HF en phase vapeur. La couche d'arrêt de gravure 52 permet ainsi d'éviter que les couches isolantes minérales 13, 21, 32 sous-jacentes ne soient gravées lors de cette étape de suppression des couches sacrificielles. Elle peut être formée en un oxyde ou nitrure d'aluminium, en trifluorure d'aluminium, ou en silicium amorphe non intentionnellement dopé. Elle peut être déposée de manière conforme, par exemple par ALD (pour *Atomic Layer Déposition,* en anglais) et peut présenter une épaisseur de l'ordre d'une dizaine de nanomètres à quelques centaines de nanomètres. Elle est au moins partiellement transparente au rayonnement électromagnétique incident. En variante, la couche d'arrêt de gravure 52 peut s'étendre continûment au contact de la couche d'encapsulation 32, et le réflecteur 51 peut reposer sur la couche d'arrêt de gravure 52.

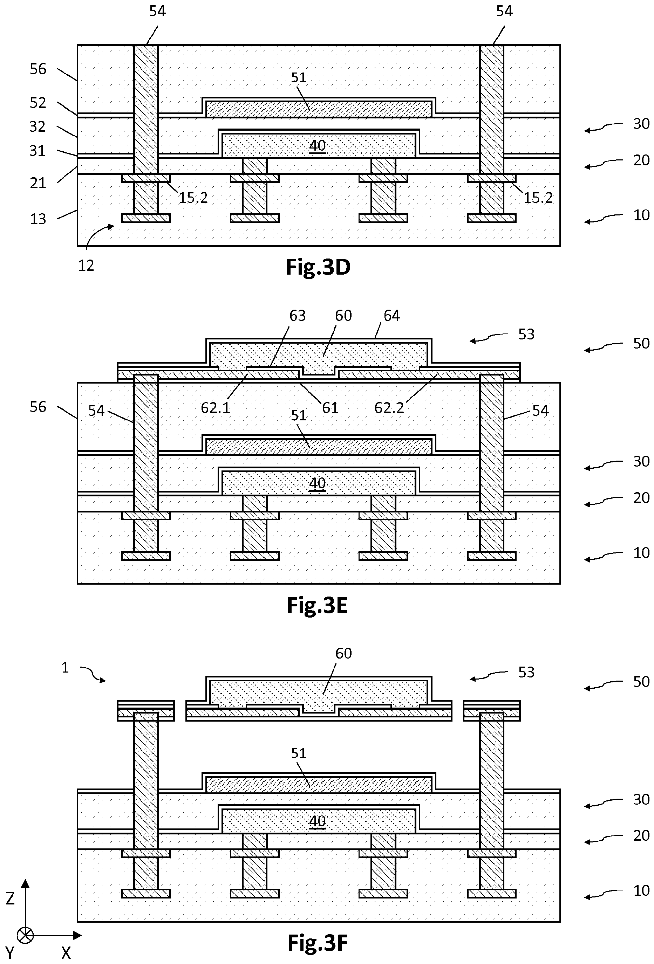

En référence à la fig.3D, on dépose ensuite une couche sacrificielle 56 sur la couche d'arrêt de gravure 52, ici une couche en un matériau diélectrique minéral, par exemple un oxyde de silicium SiOₓ déposé par dépôt chimique en phase vapeur assisté par plasma (PECVD). Ce matériau minéral est apte à être supprimé par gravure chimique humide, en particulier par attaque chimique en milieu acide, l'agent de gravure étant de préférence de l'acide fluorhydrique (HF) en phase vapeur. Cette couche sacrificielle minérale 56 est déposée de manière à s'étendre continûment sur sensiblement toute la surface du substrat de lecture 10 et recouvrir ainsi la couche d'arrêt de gravure 52. Elle présente une épaisseur, suivant l'axe Z, qui participe à définir ultérieurement la hauteur de la cavité interférentielle quart d'onde.

On réalise ensuite des orifices verticaux destinés à la formation des piliers d'ancrage 54. Ils sont réalisés par photolithographie et gravure, et traversent la couche sacrificielle minérale 56, la couche d'arrêt de gravure 52, la couche isolante d'encapsulation 32, la couche de protection 31 (le cas échéant), et la couche intercalaire 20, pour déboucher sur les portions conductrices 15.2 du circuit de lecture 12. Les orifices verticaux peuvent présenter une section droite dans le plan (X,Y) de forme carrée, rectangulaire, ou circulaire, d'une surface sensiblement égale, par exemple, à 0,25µm². On réalise ensuite les piliers d'ancrage 54 dans les orifices verticaux. Ils peuvent être réalisés par remplissage des orifices par un ou plusieurs matériaux électriquement conducteurs. A titre d'exemple, ils peuvent comporter chacun une couche de TiN déposée par MOCVD (pour *Metal Organic Chemical Vapor Deposition,* en anglais) sur les flancs verticaux des orifices, et un coeur en cuivre ou en tungstène remplissant l'espace délimité transversalement par la couche de TiN. Une étape de CMP permet ensuite de planariser la face supérieure formée par la couche sacrificielle 56 et les piliers d'ancrage 54.

En référence à la fig.3E, on réalise ensuite la membrane absorbante 53 du détecteur thermique. La membrane absorbante 53 est réalisée ici par des étapes de dépôt, photolithographie et gravure. Elle peut ainsi être formée d'un empilement de :
∘ une couche isolante inférieure 61, formée par exemple d'une sous-couche mince de protection vis-à-vis d'une gravure chimique effectuée ultérieurement, par exemple en Al₂O₃, HfO₂ ou AlN d'une épaisseur comprise entre 10nm et 50nm, et d'une sous-couche de passivation, par exemple en SiN d'une épaisseur comprise entre 10nm et 30nm ;
∘ deux électrodes 62.1, 62.2 sensiblement coplanaires et électriquement isolées l'une de l'autre, réalisées en au moins un matériau pouvant absorber le rayonnement électromagnétique à détecter, par exemple en Ti, TiN, TaN, WN, ou autre, et présentant une résistance électrique de l'ordre de 377Ω/carré. L'épaisseur peut être comprise entre 3nm et 20nm. Les électrodes 62.1, 62.2 contactent chacune un pilier d'ancrage 54 et sont séparées l'une de l'autre dans le plan XY d'une distance de préférence inférieure à λ/5 voire inférieure à 1µm de manière à ne pas perturber l'absorption du rayonnement électromagnétique à détecter de longueur d'onde centrale λ ;
∘ d'une couche isolante intermédiaire 63, réalisée en un matériau diélectrique, par exemple en Al₂O₃, HfO₂ ou AlN, et recouvrant les électrodes 62.1, 62.2 et l'espacement latéral entre celles-ci, hormis au niveau d'ouvertures débouchant sur les électrodes ;
∘ une portion 60 en un matériau thermistance, par exemple en silicium amorphe ou en un oxyde de vanadium ou de titane, d'une épaisseur par exemple comprise entre 50nm et 200nm, la portion thermistance 60 étant au contact électrique des électrodes 62.1, 62.2 via les ouvertures ;
∘ une couche isolante supérieure 64 de passivation, par exemple en SiN d'une épaisseur comprise entre 10nm et 50nm, recouvrant la portion thermistance 60.

En référence à la fig.3F, on réalise les bras de maintien (non représentés) par gravure localisée de l'empilement préalablement obtenu, puis on suspend la membrane absorbante 53. La suspension peut être effectuée après avoir réalisé l'encapsulation du détecteur thermique 50 dans un boîtier (non représenté) définissant une cavité destinée à être hermétique. La suspension peut être obtenue par gravure chimique de la couche sacrificielle minérale 56, ici par une gravure chimique humide par attaque à l'acide fluorhydrique en phase vapeur.

Ainsi, le procédé illustré sur les fig.3A à 3F permet d'obtenir un système de détection 1 dont le détecteur thermique 50 et le dispositif de compensation 30 sont agencés de manière sensiblement verticale dans un même pixel sensible. Le transducteur de compensation 40 présente une thermalisation améliorée au substrat de lecture 10 tout en étant rendu insensible au rayonnement électromagnétique incident par le réflecteur 51. La mesure du mode commun effectif relatif au pixel sensible est alors rendue plus précise, ce qui permet de déterminer efficacement la part utile du signal de réponse du détecteur thermique 50.

Dans cet exemple, le procédé de fabrication est de type monolithique, c'est-à-dire qu'il comporte une succession d'étapes de dépôt, photolithographie et gravure, réalisées à partir du même substrat de lecture. A la différence du procédé selon le deuxième mode de réalisation décrit plus loin, il ne comporte pas la réalisation de plusieurs substrats fonctionnalisés distincts les uns des autres et fixés ensemble par collage direct.

Bien entendu, le procédé peut permettre la fabrication collective d'une pluralité de pixels sensibles agencés en matrice. Chaque pixel sensible peut comporter un dispositif de compensation 30 situé sous le réflecteur 51 du détecteur thermique 50 et présentant une thermalisation améliorée du transducteur de compensation 40.

D'une manière générale, comme déjà mentionné, le transducteur de compensation et le transducteur de détection peuvent être un matériau thermistance, une jonction pn ou pin (diode), un transistor de type MOSFET, ou autre élément présentant une propriété électrique sensible en température. Les transducteurs de compensation et celui de détection peuvent être du même type ou non, voire être identiques ou non.

Il est avantageux que le transducteur du dispositif de détection et celui du dispositif de compensation soient un transistor de type MOSFET, lequel étant destiné à fonctionner en régime de faible inversion et de saturation. Un tel transducteur de détection est décrit dans le document WO2018055276. En effet, le coefficient TCC (*Température Coefficient of Current,* en anglais) d'un tel transducteur peut être particulièrement élevé, par exemple de l'ordre de 10%/K. Le coefficient TCC est l'équivalent du coefficient TCR pour un détecteur bolométrique, et est défini comme étant la variation relative du courant électrique entre la source et le drain I_{DS} en fonction de la température. Une définition plus précise du coefficient TCC est donnée dans le document de E. Fuxa, intitulé *Etude théorique du dimensionnement d'une matrice bolométrique au pas de 5µm, par report de dispositifs SOI sur structures suspendues pour des applications dans l'imagerie infrarouge non refroidie,* thèse de doctorat soutenue le 15 décembre 2016.

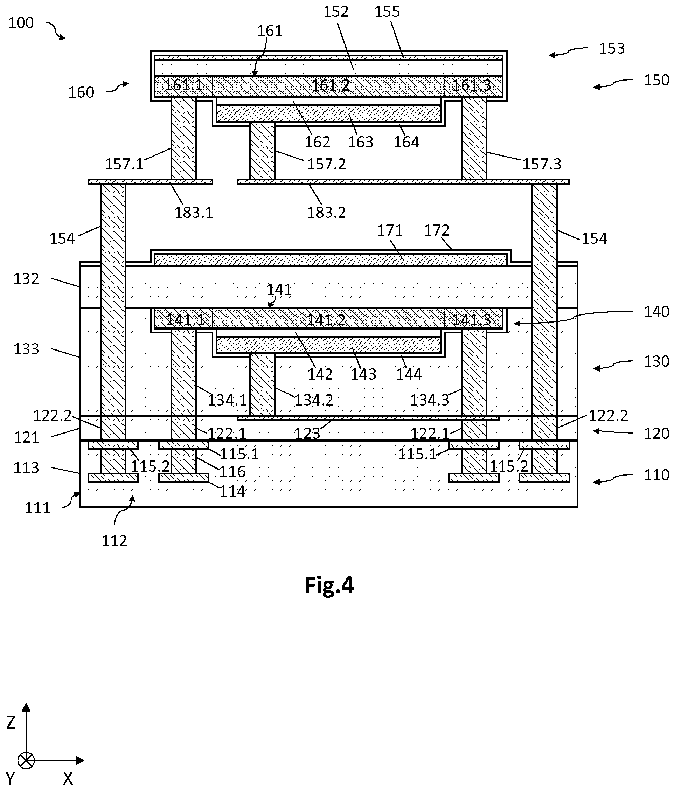

A ce titre, la figure 4 est une vue en coupe transversale, schématique et partielle, d'un système de détection 100 selon un deuxième mode de réalisation. Ce système de détection 100 est de préférence utilisé en mode de lecture simultanée des pixels sensibles (*snapshot*) du fait notamment que les courants électriques parcourant les transducteurs sont généralement de l'ordre de quelques nanomètres. Il peut cependant être également utilisé en mode de lecture ligne après ligne (*rolling shutter*).

Le système de détection 100 est obtenu par un procédé comportant des étapes de réalisation de différents substrats fonctionnalisés distincts, lesquels sont ensuite fixés ensemble de préférence par collage mixte, également appelée collage hybride (*wafer bonding,* en anglais), qui combine le collage par thermocompression entre des portions conductrices métalliques qui peuvent être réalisées notamment en cuivre, avec le collage direct qui fait intervenir des forces de Van der Waals entre des surfaces diélectriques par exemple réalisées en oxyde de silicium.

Le système de détection 100 comporte un premier substrat fonctionnalisé 110, dit de lecture, correspondant à un substrat support 111 contenant le circuit de lecture 112. Cette structure est identique ou similaire à celle décrite précédemment et n'est pas détaillée à nouveau ici. Il comporte une face supérieure 110a au niveau de laquelle affleure une surface d'un matériau diélectrique et une surface des portions conductrices 115.1, 115.2 adaptées à polariser le transducteur de compensation 140 et le transducteur de détection 160.

Le système de détection 100 comporte un deuxième substrat fonctionnalisé 130, dit de compensation. Le substrat de compensation 130 est fixé, ici par collage mixte, au substrat de lecture 110. Il comporte le transducteur de compensation 140, lequel est ici un transistor de type MOSFET, dont la source 141.1, la grille 143, et le drain 141.3 sont électriquement connectés au circuit de lecture 112 via des plots conducteurs 134.1, 134.2, 134.3. Dans cet exemple, la grille 143 et le drain 141.3 sont portés au même potentiel électrique, par l'intermédiaire d'un bras de connexion latérale 123 connectant le plot conducteur 134.2 de connexion de la grille 143 et le plot conducteur 134.3 de connexion du drain 141.3 au même plot conducteur 122.1.

Plus précisément, le substrat de compensation 130 comporte ici une couche intercalaire de connexion 120 (facultative) comportant des plots conducteurs 122 destinés à polariser le transducteur de compensation 140 et le transducteur de détection 160, ainsi qu'un bras de connexion latérale 123. Ces plots conducteurs 122 s'étendent dans une couche isolante 121 réalisée en un matériau diélectrique. La couche intercalaire 120 présente une épaisseur sensiblement constante, de sorte que ses faces inférieure et supérieure sont sensiblement parallèles et coplanaires. Le matériau diélectrique présente avantageusement une conductivité thermique sensiblement égale à celle du substrat de lecture 110. Le bras de connexion latérale 123 s'étend dans le plan XY au niveau de la face supérieure de la couche isolante 121, et est réalisé en au moins un matériau électriquement conducteur.

Le transducteur de compensation 140 est ici un transistor de type MOSFET. Il comporte une portion semiconductrice 141 réalisée en un matériau semiconducteur, par exemple en silicium. Elle présente une première zone dopée 141.1 dite source, une deuxième zone dopée 141.3 dite drain. La source 141.1 et le drain 141.3 sont des zones dopées selon un premier type de conductivité, par exemple de type n ou p. Ils sont séparés mutuellement par une zone intermédiaire 141.2 dite canal, laquelle est soit totalement déplétée, soit dopée selon un deuxième type de conductivité opposé au premier type. Une couche isolante 142, habituellement appelée oxyde de grille, s'étend sur une partie de la face inférieure de la portion semiconductrice 141, et est formée d'au moins un matériau électriquement isolant, par exemple un oxyde de silicium. La couche isolante 142 revêt une couche conductrice 143 formant l'électrode de grille, laquelle est formée d'au moins un matériau électriquement conducteur.

Dans cet exemple, une couche d'arrêt de gravure 144 peut recouvrir la face inférieure laissée libre ainsi que les flancs du transducteur de compensation 140. Cette couche d'arrêt de gravure 144 est notamment présente lorsque ce substrat fonctionnalisé est réalisé de manière collective et est destiné à former soit le substrat de compensation 130, soit le substrat de détection 150.

Un premier plot conducteur 134.1 s'étend suivant l'axe Z entre la source 141.1 et un plot conducteur 122.1 et assure la connexion électrique entre ces derniers. Un deuxième plot conducteur 134.2 s'étend suivant l'axe Z entre la grille 143 et le bras de connexion latérale 123 et assure la connexion électrique entre ces derniers, et un troisième plot conducteur 134.3 s'étend suivant l'axe Z entre le drain 141.3 et le même bras de connexion latérale 123 et assure leur connexion électrique. Les plots conducteurs 134 sont réalisés en au moins un matériau électriquement conducteur.

Le transducteur de compensation 140 et les plots conducteurs 134 sont encapsulés dans le plan XY par au moins une couche isolante 132, 133 dont l'épaisseur est sensiblement constante de sorte que les faces inférieure et supérieure du substrat de compensation 130 sont sensiblement parallèles et planaires. Ici, une première couche isolante 133 s'étend à partir de la couche intercalaire 120 jusqu'à la face supérieure de la portion semiconductrice 141. Une deuxième couche isolante 132 recouvre la première couche isolante 133 ainsi que le transducteur de compensation 140. Elle présente une face supérieure sensiblement plane. Ces deux couches isolantes d'encapsulation 132, 133 sont réalisées en un matériau diélectrique dont la conductivité thermique est avantageusement égale à celle du substrat de lecture 110, de manière à améliorer la thermalisation du transducteur de compensation 140 au substrat de lecture 110.

Le système de détection 100 comporte un détecteur thermique, issu d'un troisième substrat fonctionnalisé 150 dit de détection (présenté plus loin). Dans cet exemple, le transducteur thermométrique 160 du détecteur thermique 150 est un transistor de type MOSFET identique ou similaire au transducteur de compensation 140.

Le détecteur thermique 150 comporte un réflecteur 171, formé d'une portion réalisée en au moins un matériau réfléchissant, par exemple un matériau métallique, reposant sur la couche isolante d'encapsulation 132. Le réflecteur 171 est situé en regard, suivant l'axe Z, du transducteur de compensation 140 de manière à le rendre insensible au rayonnement électromagnétique incident. Il présente une surface, dans le plan XY, de préférence supérieure ou égale à celle du transducteur de compensation 140.

Dans cet exemple, une couche d'arrêt de gravure 172 s'étend de manière à recouvrir la couche isolante d'encapsulation 132, et recouvre également ici le réflecteur 171. La couche d'arrêt de gravure 172 est requise lorsqu'il s'agit de protéger les couches isolantes 113, 121, 132, 133 sous-jacentes lors d'une étape de suspension du transducteur de détection 160 effectuée par gravure humide d'une couche sacrificielle minérale, par exemple par gravure HF en phase vapeur.

Le détecteur thermique 150 comporte une membrane absorbante 153, suspendue au-dessus du réflecteur 171, au moyen ici de piliers d'ancrage 154, de bras de connexion latérale 183, et de plots conducteurs 157. Cette membrane absorbante 153 comporte le transducteur de détection 160 associé à un absorbeur du rayonnement électromagnétique à détecter.

Les piliers d'ancrage 154 sont des plots conducteurs réalisés en au moins un matériau électriquement conducteur, qui s'étendent suivant l'axe Z jusqu'à une extrémité au contact avec les plots conducteurs 122.2 de la couche intercalaire de connexion 120.

A partir de l'autre extrémité des piliers d'ancrage 154, des bras de connexion latérale 183.1, 183.2 s'étendent dans le plan XY, et sont réalisés en au moins un matériau électriquement conducteur. Ils sont destinés à maintenir suspendue la membrane absorbante 153, et à permettre la connexion électrique du transducteur de détection 160. Dans cet exemple, le bras de connexion latérale 183.2 portent la grille 163 et le drain 161.3 du transistor MOSFET à un même potentiel électrique.

Le transducteur de détection 160 comporte une portion semiconductrice 161 présentant une première zone dopée 161.1 dite source, une deuxième zone dopée 161.3 dite drain, et une zone intermédiaire 161.2 dite canal. Les deux zones dopées 161.1, 161.3 présentent un premier type de conductivité, par exemple de type n ou p, et le canal 161.2 est une zone pleinement déplétée, voire présentant un deuxième type de conductivité opposé au premier type. Une couche isolante 162, dite oxyde de grille, s'étend sur une partie de la face inférieure de la portion semiconductrice 161, et est formée d'au moins un matériau électriquement isolant. La couche isolante 162 revêt une couche conductrice 163 formant une électrode de grille, laquelle est formée d'au moins un matériau électriquement conducteur. La source 161.1, la grille 163 et le drain 161.3 sont en contact électrique avec, respectivement, des premier, deuxième et troisième plots conducteurs 157.1, 157.2, 157.3.

Ainsi, un premier plot conducteur 157.1 s'étend suivant l'axe Z à partir d'un premier bras de connexion latérale 183.1 jusqu'à la source 161.1 du transducteur de détection 160. Il est ici avantageusement coaxial au plot conducteur 134.1 de connexion de la source 141.1 du transducteur de compensation 140. Un deuxième plot conducteur 157.2 s'étend suivant l'axe Z à partir du deuxième bras de connexion latérale 183.2 jusqu'à l'électrode de grille 163. Il est ici avantageusement coaxial au plot conducteur 134.2 de connexion de la grille 143 du transducteur de compensation 140. Un troisième plot conducteur 157.3 s'étend suivant l'axe Z à partir du même deuxième bras de connexion latérale 183.2 jusqu'au drain 161.3. Il est ici avantageusement coaxial au plot conducteur 134.3 de connexion du drain 141.3 du transducteur de compensation 140.

Dans cet exemple, la face supérieure de la portion semiconductrice 161 est de préférence revêtue par une couche isolante supérieure 152, qui sépare la portion semiconductrice 161 d'une couche supérieure absorbante 155 du rayonnement électromagnétique à détecter. Dans une variante non représentée, cette couche absorbante 155, lorsqu'elle est électriquement connectée au circuit de lecture 112, peut participer à ajuster la tension de seuil du transistor MOSFET.

Enfin, une couche d'arrêt de gravure 164 recouvre ici le transducteur de détection 160 ainsi que la couche isolante 152 et la couche absorbante supérieure 155. Cette couche d'arrêt de gravure 164 permet notamment de préserver cet ensemble lors d'une étape de mise en suspension de la structure par gravure chimique d'une couche sacrificielle minérale, par exemple par gravure HF en phase vapeur.

Ainsi, le système de détection 100 présente l'avantage de comporter, au niveau du pixel sensible, un transducteur de compensation 140 disposé au droit, suivant l'axe Z, du transducteur de détection 160. Le transducteur de compensation 140 est d'une part rendu insensible au rayonnement électromagnétique incident du fait de la présence du réflecteur 171, et d'autre part thermalisé au substrat de lecture 110. La thermalisation du transducteur de compensation 140 au substrat de lecture 110 est améliorée lorsque les couches isolantes d'encapsulation 132, 133, ainsi que la couche isolante 121 de la couche intercalaire 120, présentent une conductivité thermique sensiblement égale à celle du substrat de lecture 110. Par ailleurs, le facteur de remplissage est réduit, de sorte que le pixel sensible peut présenter des dimensions latérales, dans le plan XY, de l'ordre de 5µm.

De plus, les transistors MOSFET de compensation 140 et de détection 160 sont ici avantageusement adaptés à fonctionner en régime de faible inversion, via l'application d'une tension V_{GS} de l'ordre de 50mV à 75mV, et en régime de saturation via la tension V_{DS} du même ordre de grandeur, permettant ainsi d'obtenir un coefficient TCC particulièrement élevé, par exemple de l'ordre de 10%/K⁻¹. Ces régimes de faible inversion et de saturation sont obtenus simplement, en portant la grille et le drain au même potentiel électrique. Le fait que les tensions V_{GS} et V_{DS} soient égales et de faible intensité permet de limiter la dissipation Joule, l'auto-échauffement de la membrane absorbante, ce qui permet d'augmenter le rapport signal sur bruit (SNR).

De plus, le fait que la grille 163 et le drain 161.3 soient portés à un même potentiel électrique par le même bras de connexion latérale 183.2 permet d'améliorer l'isolation thermique de la membrane absorbante 153 dans la mesure où deux connexions électriques au lieu de trois assurent la polarisation du détecteur thermique.

Par ailleurs, la cavité interférentielle quart d'onde peut être formée entre le réflecteur 171 et la couche conductrice de grille 163, voire entre le réflecteur 171 et la couche conductrice supérieure 155. Cette dernière peut être électriquement connectée de sorte qu'il est possible d'ajuster la tension de seuil du transistor en introduisant des charges fixes dans la couche isolante 152.

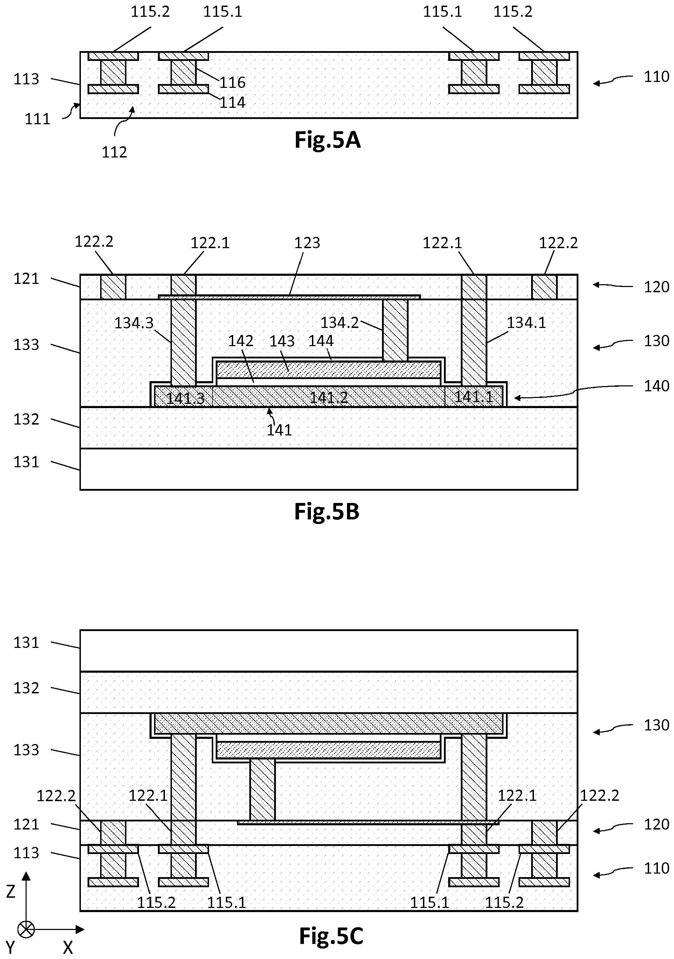

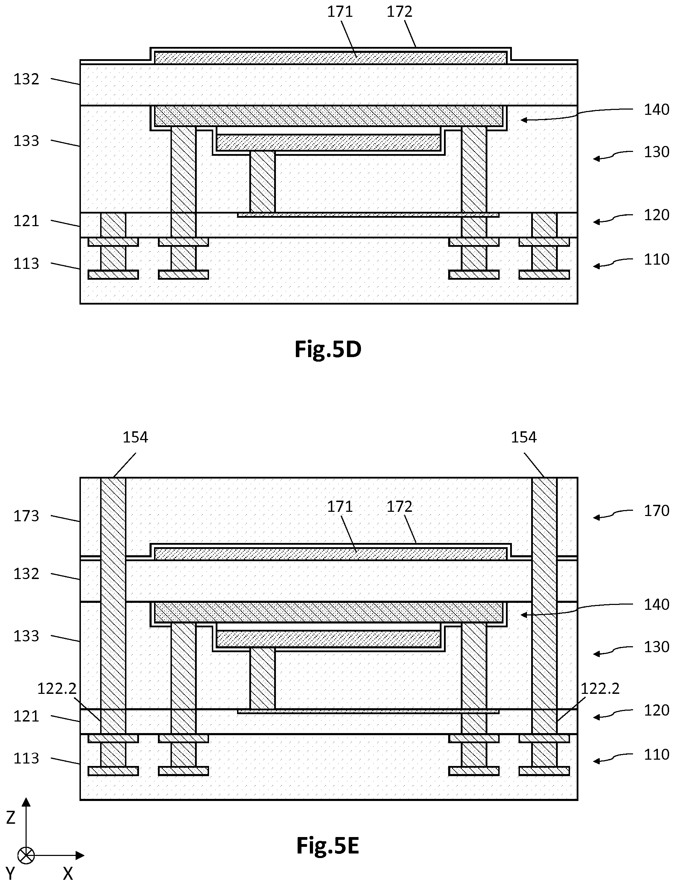

Les figures 5A à 5H illustrent différentes étapes d'un procédé de fabrication du système de détection 100 selon le deuxième mode de réalisation. Ce procédé se distingue essentiellement de celui illustré sur les fig.3A à 3F en ce qu'il comporte des étapes de réalisation de différents substrats fonctionnalisés distincts, lesquels sont ensuite fixés ensemble notamment par une technique de collage mixte.

En référence à la fig.5A, on réalise un premier substrat fonctionnalisé 110, dit de lecture. Il comporte un substrat support 111 contenant le circuit de lecture 112 adapté à commander et lire le dispositif de compensation 130 et le détecteur thermique 150. Le circuit de lecture 112 comporte ainsi des portions conductrices 115.1, 115.2 qui affleurent la face supérieure du substrat support 111, laquelle est sensiblement planaire. Les portions conductrices 114, 115 et les vias conducteurs 116 peuvent être réalisés en cuivre, en aluminium ou en tungstène, entre autres, par exemple au moyen d'un procédé damascène dans lequel on remplit des tranchées réalisées dans la couche diélectrique inter-métal. L'affleurement des portions conductrices 115 au niveau de la face supérieure du substrat de lecture 110 peut être obtenu par une technique de polissage mécano-chimique (CMP).

En référence à la fig.5B, on réalise un deuxième substrat fonctionnalisé 130, dit de compensation. Le substrat de compensation 130 comporte un empilement d'un substrat support 131, réalisé par exemple en silicium, d'une couche isolante 132 et d'une portion semiconductrice 141. Cet empilement peut être obtenu à partir d'un substrat SOI dont la portion semiconductrice 141 est formée par photolithographie et gravure de la couche mince de silicium. La couche isolante 132 est réalisée en un matériau diélectrique, par exemple un oxyde de silicium, et présente une épaisseur par exemple comprise entre 20 nm et 145nm. La portion semiconductrice 141 est réalisée en un matériau semiconducteur, par exemple en silicium, et présente une épaisseur par exemple comprise entre 20 nm et 70 nm. Le matériau semiconducteur est avantageusement entièrement déplété (substrat FDSOI, pour *Fully Depleted Silicon On Isolator*, en anglais).

Une couche isolante 142 (oxyde de grille) est formée sur une partie de la face libre de la portion semiconductrice 141, et est réalisée en au moins un matériau diélectrique. Elle peut être formée d'un empilement d'une sous-couche de SiO₂ d'une épaisseur comprise entre 3nm et 30nm obtenue par oxydation thermique du silicium de la portion semiconductrice, et d'une sous-couche de HfO₂ d'une épaisseur comprise entre 2nm et 10nm obtenue par ALD (*Atomic Layer Deposition,* en anglais).

Une couche conductrice 143 formant une électrode de grille est formée sur la face libre de la couche isolante 142, et est réalisée en au moins un matériau électriquement conducteur. Elle peut être formée d'un empilement d'une sous-couche de TiN d'une épaisseur comprise entre 5nm et 20nm déposé par exemple par dépôt physique en phase vapeur (PVD, pour *Physical Vapor Deposition,* en anglais), et d'une sous-couche de silicium polycristallin d'une épaisseur comprise entre 30nm et 100nm obtenue par dépôt LPCVD (pour *Low Pressure Chemical Vapor Deposition,* en anglais).

Les étapes de réalisation de l'oxyde de grille 142 et de l'électrode de grille 143 font habituellement porter la structure à une température supérieure à 400°C, par exemple de l'ordre de 950°C pour la formation du SiO₂ thermique et de l'ordre de 650°C pour la formation du silicium polycristallin. Ces températures étant supérieures à la valeur de 400°C correspondant sensiblement au budget thermique du circuit de lecture CMOS, elles impliquent que le dispositif de compensation 130 soit réalisé via un substrat fonctionnalisé distinct du substrat de lecture 110.

La couche isolante 142 et la grille 143 sont structurées par photolithographie et gravure de sorte qu'elles ne recouvrent qu'une partie de la face libre de la portion semiconductrice 141, permettant ainsi de prendre les contacts électriques au niveau de zones latérales dopées de la portion semiconductrice 141 formant la source 141.1 et le drain 141.3 du transistor.

La source 141.1 et le drain 141.3 sont formés par implantation ionique de dopants dans les zones de la portion semiconductrice 141 non recouvertes par la grille 143. Ils présentent un même premier type de conductivité, par exemple de type n ou de type p. Le canal 141.2 est totalement déplété, voire présente un deuxième type de conductivité opposé au premier type. La face libre supérieure de la source 141.1, celle de la grille 143 et celle du drain 141.3 peuvent être revêtues d'une couche mince métallique (non représentée), par exemple de nickel et de TiN, déposée par PVD suivi d'une phase de siliciuration de sorte que les zones de Ni et TiN n'ayant pas réagi soient ensuite supprimées. Ainsi, seules les faces supérieures de la source 141.1, de la grille 143 et du drain 141.3 sont revêtues de la couche mince métallique. Cette couche mince métallique permet d'améliorer la reprise de contact électrique avec les plots conducteurs 134 décrits plus loin.

Dans cet exemple, une couche d'arrêt de gravure 144 peut recouvrir les flancs et la face libre de la portion semiconductrice 141, de la couche isolante 142 (flancs), et de la grille 143. Cette couche d'arrêt de gravure 144 est présente lorsque, lors du procédé de fabrication, ce substrat fonctionnalisé est réalisé en vue de former soit le substrat de compensation soit le substrat de détection, ces deux substrats fonctionnalisés ayant alors un transducteur structurellement identique. La couche d'arrêt de gravure 144 est réalisée en un matériau sensiblement inerte à un agent de gravure mis en oeuvre lors d'une étape de suspension de la membrane absorbante du détecteur thermique par gravure humide d'une couche sacrificielle minérale, par exemple par gravure HF en phase vapeur. Le matériau inerte peut être, par exemple, de l'Al₂O₃, de l'AlN, ou de l'HfO₂.

Une couche isolante d'encapsulation 133, réalisée en un matériau diélectrique, est ensuite déposée de manière à recouvrir le transducteur de compensation 144 ainsi formé. Une étape d'une planarisation mécano-chimique (CMP) est ensuite effectuée de manière à rendre sensiblement plane la face libre supérieure. De préférence, le matériau diélectrique de la couche isolante d'encapsulation 133 présente une conductivité thermique sensiblement égale à celle du substrat de lecture 110, améliorant ainsi la thermalisation du transducteur de compensation 140 avec le substrat de lecture 110. Le matériau diélectrique peut être, par exemple, un oxyde ou un nitrure de silicium.

Des plots conducteurs 134 sont ensuite réalisés, de manière à permettre de contacter électriquement la source 141.1, la grille 143 et le drain 141.3. Pour cela, des orifices sont réalisés au travers de la couche isolante d'encapsulation 133 et de la couche d'arrêt de gravure 144 (le cas échéant), de manière à déboucher sur la face libre supérieure de la source 141.1, de la grille 143, et du drain 141.3. Les plots conducteurs 134 sont réalisés par dépôt d'au moins un matériau conducteur, par exemple par dépôts successifs de titane Ti, de nitrure de titane TiN et de tungstène W, suivi d'une planarisation mécano-chimique de manière à rendre sensiblement plane la face supérieure.

La couche intercalaire 120 est ensuite réalisée à partir de la face supérieure de la structure obtenue. Ainsi, on réalise tout d'abord le bras de connexion latérale 123 par dépôt d'au moins un matériau électriquement conducteur, de manière à être au contact électrique des plots conducteurs 134.2, 134.3 de connexion de la grille 143 et du drain 141.3. Puis, on dépose une couche isolante 121 réalisée en un matériau diélectrique, par exemple un oxyde ou un nitrure de silicium, de manière à recouvrir la structure obtenue. Des plots conducteurs 122.1, 122.2 sont ensuite réalisés au travers de la couche isolante 121, par réalisation d'orifices traversants, dépôt d'au moins un matériau électriquement conducteur, puis planarisation mécano-chimique. Dans cet exemple, deux plots conducteurs 122.2 sont destinés à être au contact des portions conductrices 115.2 de polarisation du détecteur thermique 150, et deux plots conducteurs 122.1 sont destinés à être au contact des portions conductrices 115.1 de polarisation du dispositif de compensation 130. Ces plots conducteurs 122.1 sont au contact électrique du bras de connexion latérale 123 et du plot conducteur 134.1 de connexion de la source 141.1.

En référence à la fig.5C, on réalise ensuite la fixation du substrat de compensation 130 ainsi obtenu au substrat de lecture 110. Pour cela, la face supérieure libre du substrat de compensation 130 est mise en contact avec la face supérieure libre du substrat de lecture 110. Les plots conducteurs 122.1 sont mis en contact avec les portions conductrices 115.1, et les plots conducteurs 122.2 sont mis en contact avec les portions conductrices 115.2. La fixation des deux substrats fonctionnalisés est de préférence assurée par la technologie de collage mixte.

En référence à la fig.sD, on réalise ensuite la suppression du substrat support 131 du substrat de compensation 130, par exemple par meulage (*grinding,* en anglais). La couche isolante 132 peut être amincie ou non. On réalise ensuite une couche intercalaire d'espacement optique 170, qui comporte le réflecteur 171 et participe à définir la taille de la cavité interférentielle quart d'onde. On réalise ensuite le réflecteur 171 sur la face supérieure de la structure ainsi obtenue. Pour cela, on dépose au moins un matériau réfléchissant du rayonnement électromagnétique incident, par exemple de l'aluminium Al, du cuivre aluminium AlCu, du cuivre Cu, de l'or Au etc. Cette couche est ensuite structurée par photolithographie et gravure de manière à être située en regard du transducteur de compensation 140, dans le but de le rendre optiquement insensible vis-à-vis du rayonnement électromagnétique incident.

On réalise ensuite une couche d'arrêt de gravure 172 de manière à recouvrir la couche isolante 132. Dans cet exemple, elle revêt également le réflecteur 171, mais en variante, elle peut s'étendre continûment sur la couche isolante 132 et être localement revêtue par le réflecteur 171. Cette couche d'arrêt de gravure 172 est requise lorsque la suspension de la membrane absorbante 153 du détecteur thermique 150 est réalisée par gravure humide d'une couche sacrificielle minérale, par exemple par gravure HF vapeur. La couche d'arrêt de gravure, par exemple réalisée en Al₂O₃ ou en AlN ou en HfO2, est sensiblement inerte à l'agent de gravure et assure la protection des couches isolantes minérales sous-jacentes.

En référence à la fig. 5E, on réalise une partie de la cavité interférentielle quart d'onde ainsi qu'une partie des piliers d'ancrage. Pour cela, une couche sacrificielle 173 est déposée de manière à recouvrir la couche d'arrêt de gravure 172 et le réflecteur 171, suivi d'une planarisation mécano-chimique pour rendre la face supérieure sensiblement plane. Elle peut être réalisée en un matériau minéral, par exemple un oxyde de silicium, et présenter une épaisseur comprise entre 1,5µm et 2,5µm dans le cas de la détection d'un rayonnement infrarouge compris entre 8µ et 14µm (gamme du LWIR). Les piliers d'ancrage 154 sont réalisés par formation d'ouvertures traversant la couche sacrificielle 173, la couche d'arrêt de gravure 172, les couches isolantes 132, 133, pour déboucher sur les plots conducteurs 122.2, suivi d'un dépôt d'au moins un matériau conducteur, par exemple une couche d'accroche métallique et du cuivre. Une étape de planarisation mécano-chimique est effectuée pour rendre la face supérieure sensiblement plane. L'empilement ainsi obtenu forme une couche intercalaire d'espacement optique 170. Elle comporte donc le réflecteur 171, la couche d'arrêt de gravure 172, et la couche sacrificielle 173. Elle est traversée par les piliers d'ancrage 154.

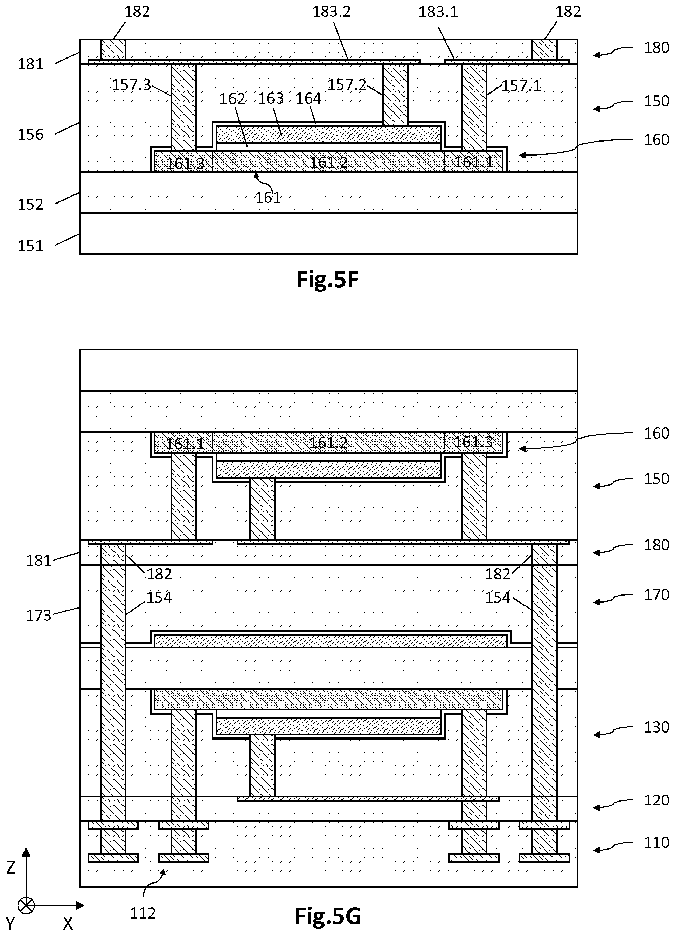

En référence à la fig.5F, on réalise un troisième substrat fonctionnalisé 150, dit de détection. Dans cet exemple, ce substrat de détection 150 présente un transducteur identique à celui du substrat de compensation 140. Il n'est donc pas décrit à nouveau en détail. Le transducteur de détection 160 est formé à partir d'un substrat SOI, et de préférence un substrat FDSOI. Il repose sur une couche isolante 152, laquelle recouvre un substrat support 151. Il est formé, comme décrit précédemment, d'une portion semiconductrice 161 comportant une première zone 161.1 dopée selon un premier type de conductivité et formant la source, une deuxième zone 161.3 dopée selon le premier type de conductivité et formant le drain, et une zone intermédiaire 161.2 totalement déplétée ou dopée selon le deuxième type de conductivité et formant le canal. Le canal 161.2 est recouvert d'une couche conductrice 163 formant la grille, et d'une couche isolante 162 intercalée entre la grille 163 et le canal 161.2. Le transducteur de détection 160 est avantageusement réalisé de manière identique ou similaire au transducteur de compensation 140, de sorte qu'ils présentent des propriétés thermoélectriques sensiblement identiques.

Comme mentionné précédemment, la réalisation de l'oxyde de grille 162 et de l'électrode de grille 163 font habituellement porter la structure à une température supérieure à 400°C, ce qui implique que le détecteur thermique 150 soit réalisé via un substrat fonctionnalisé distinct du substrat de lecture 110.

Ici, une couche d'arrêt de gravure 164 recouvre les flancs et la face libre de la portion semiconductrice 161, de la couche isolante 162, et de la grille 163. Cette couche d'arrêt de gravure 164 est présente ici dans la mesure où la membrane absorbante 153 contenant le transducteur de détection 160 est destinée à être suspendue par gravure de couches sacrificielles. La couche d'arrêt de gravure 164 est réalisée en un matériau sensiblement inerte à l'agent de gravure mis en oeuvre lors de cette étape de suspension de la membrane absorbante, par exemple par gravure HF en phase vapeur. Le matériau inerte peut être, par exemple, de l'Al₂O₃, de l'AlN, ou de l'HfO2.

Une couche sacrificielle 156, réalisée par exemple en un matériau diélectrique minéral, est ensuite déposée de manière à recouvrir le transducteur de détection 160 ainsi formé. Une étape d'une planarisation mécano-chimique (CMP) est ensuite effectuée de manière à rendre sensiblement plane la face supérieure. Le matériau de la couche sacrificielle 156 peut être, par exemple, un oxyde ou un nitrure de silicium.

Des plots conducteurs 157 sont ensuite réalisés, de manière à permettre de contacter électriquement la source 161.1, la grille 163 et le drain 161.3. Pour cela, des orifices sont réalisés au travers de la couche sacrificielle 156 et de la couche d'arrêt de gravure 164, de manière à déboucher sur la face libre supérieure de la source 161.1, de la grille 163, et du drain 161.3. Les plots conducteurs 157 sont réalisés par dépôt d'au moins un matériau conducteur, par exemple par dépôts successifs de titane Ti, de nitrure de titane TiN et de tungstène W, suivi d'une planarisation mécano-chimique de manière à rendre sensiblement plane la face supérieure.

La couche intercalaire de connexion 180 est ensuite réalisée à partir de la face supérieure de la structure obtenue. Cette couche intercalaire 180 est requise lorsque le transducteur de détection 160 présente une structure identique à celle du transducteur de compensation 140, notamment lorsque les plots de connexion 157 et les plots de connexion 134 sont coaxiaux deux à deux. Elle comporte alors au moins deux bras de connexion latérale 183.1, 183.2 permettant de déporter latéralement le contact électrique des plots conducteurs 157 de connexion de la source, de la grille et du drain.

Ainsi, on réalise tout d'abord un premier bras de connexion latérale 183.2 par dépôt d'au moins un matériau électriquement conducteur, de manière à être au contact électrique des plots conducteurs 157.2, 157.3 de connexion de la grille 163 et du drain 161.3. On réalise ensuite un deuxième bras de connexion latérale 183.1 de manière à être au contact électrique du plot conducteur 157.1 de connexion de la source 161.1. Puis, on dépose une couche sacrificielle 181 réalisée par exemple en un matériau diélectrique minéral, par exemple un oxyde ou un nitrure de silicium, de manière à recouvrir la structure obtenue. Des plots conducteurs 182 sont ensuite réalisés au travers de la couche sacrificielle 181, par réalisation d'orifices traversants, dépôt d'au moins un matériau électriquement conducteur, puis planarisation mécano-chimique. Dans cet exemple, deux plots conducteurs 182 sont destinés à être au contact des piliers d'ancrage 154. Ces plots conducteurs 182 sont au contact électrique des bras de connexion latérale 183.

En référence à la fig. 5G, on réalise ensuite la fixation du substrat de détection 150 ainsi obtenu à la structure formée des substrats de lecture et de compensation. Pour cela, la face supérieure libre de la structure formée du substrat de détection 150 et de la couche intercalaire de connexion 180 est mise en contact avec la face supérieure libre de la structure de lecture et de compensation, et plus précisément de la couche intercalaire d'espacement optique 170. Les plots conducteurs 182 sont mis en contact avec les piliers d'ancrage 154 de manière à permettre la connexion électrique du détecteur thermique 150 avec le circuit de lecture 112. La surface diélectrique de la couche sacrificielle 181 est mise au contact de la surface diélectrique de la couche sacrificielle 173. La fixation du substrat de détection avec la structure de lecture et de compensation est de préférence assurée par collage mixte, tel que décrit précédemment.

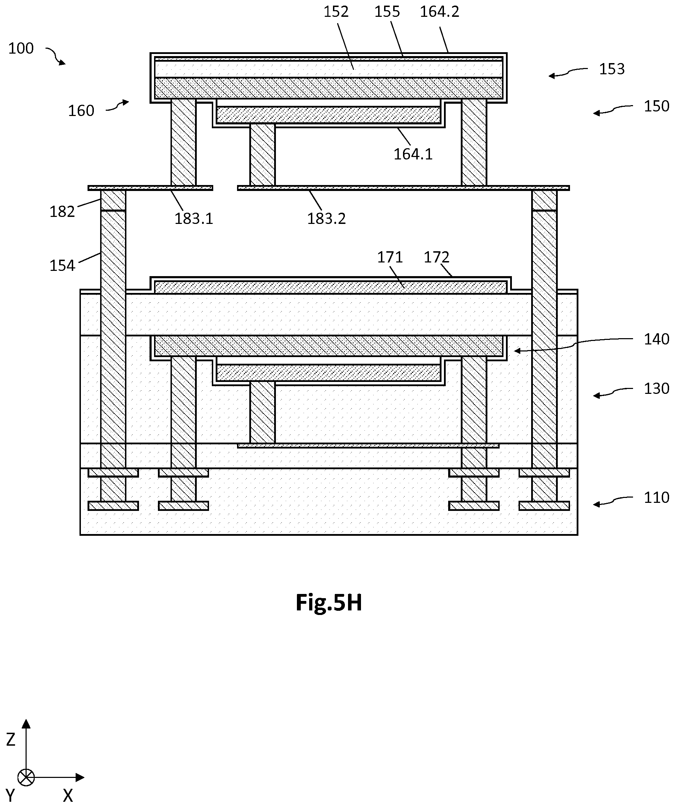

En référence à la fig.5H, le substrat support 151 est supprimé, par exemple par meulage, et la couche isolante 152 peut être amincie. Une couche absorbante 155 peut être déposée sur la couche isolante 152, de manière à améliorer l'absorption du rayonnement électromagnétique à détecter. La couche isolante 152 est ensuite structurée par photolithographie et gravure de manière à ne s'étendre dans le plan XY qu'en regard de la portion semiconductrice 161. Une couche d'arrêt de gravure 164.2, de préférence identique à la couche d'arrêt de gravure 164.1, est ensuite déposée de manière à recouvrir continûment la surface libre de la couche isolante 152 et de la couche absorbante 155. En variante, la couche d'arrêt de gravure 164.2 peut être déposée directement sur la couche isolante 152 et être revêtue localement par la couche absorbante 155. Comme mentionné précédemment, la couche absorbante 155 peut être électriquement connectée au circuit de lecture, de manière à pouvoir ajuster la tension de seuil du transistor.

La suspension de la membrane absorbante 153 du détecteur thermique 150 est ensuite réalisée, par gravure des couches sacrificielles 173, 181, 156. Lorsque ces couches sacrificielles sont réalisées en un matériau minéral, par exemple en un oxyde de silicium, la suppression peut être effectuée par gravure humide en HF vapeur. La couche d'arrêt de gravure 172 permet de préserver les couches minérales sous-jacentes, et la couche d'arrêt de gravure 164 assure la protection de la membrane suspendue.

Ainsi, on a réalisé un pixel sensible, et de préférence une matrice de pixels sensibles de manière collective, présentant un agencement vertical suivant l'axe Z d'un détecteur thermique 150, d'un réflecteur 171, et d'un dispositif de compensation 130. Le transducteur de compensation 140 est ainsi rendu insensible au rayonnement électromagnétique incident par le réflecteur 171, et présente une bonne thermalisation au substrat de lecture 110. Le facteur de remplissage est ainsi augmenté, et la détermination du signal utile associé à l'absorption du rayonnement électromagnétique à détecter est rendue plus précise par le fait que le transducteur de compensation 140 est situé dans le pixel sensible.

Des modes de réalisation particuliers viennent d'être décrits. Différentes variantes et modifications apparaîtront à l'homme du métier.

Ainsi, la couche intercalaire 120 a été réalisée à partir du substrat de compensation 130 mais pourrait être réalisée à partir du substrat de lecture 110. De la même manière, la couche intercalaire 180 a été réalisée à partir du substrat de détection 150 mais pourrait être réalisée à partir de la structure formée du substrat de compensation collée au substrat de lecture.

Plus largement, le transducteur de compensation peut être réalisé directement à partir du substrat de lecture, et être par exemple un matériau thermistance, et le transducteur de détection peut être réalisé via un substrat fonctionnalisé reporté et collé ensuite sur la structure formée du dispositif de compensation et du substrat de lecture, et être par exemple une diode à jonction pn ou pin ou un transistor identique ou similaire à celui décrit précédemment. En variante, le transducteur de compensation peut être réalisé via un substrat fonctionnalisé reporté et collé ensuite sur le substrat de lecture, et être par exemple une diode à jonction pn ou pin ou un transistor identique ou similaire à celui décrit précédemment, et le transducteur de détection peut être réalisé directement à partir de la structure formée du dispositif de compensation et du substrat de lecture, et être par exemple un matériau thermistance.

## Revendications

1. Système de détection (1 ; 100) d'un rayonnement électromagnétique, comportant :
∘ un substrat dit de lecture (10 ; 110) ;
∘ au moins un détecteur thermique (50 ; 150), comportant :
• une membrane absorbante (53 ; 153) du rayonnement électromagnétique,
▪ thermiquement isolée vis-à-vis du substrat de lecture (10 ; 110), et
▪ comportant un transducteur thermométrique de détection (60 ; 160) choisi parmi une diode à jonction pn ou pin, un transistor à effet de champ, ou un matériau thermistance ;
• un réflecteur (51 ; 171) du rayonnement électromagnétique,
▪ disposé entre la membrane absorbante (53 ; 153) et le substrat de lecture ;
∘ au moins un dispositif de compensation (30 ; 130), comportant :
• un transducteur thermométrique de compensation (40 ; 140) choisi parmi une
diode à jonction pn ou pin, un transistor à effet de champ, ou un matériau thermistance,
▪ en contact thermique avec le substrat de lecture ;
∘ un circuit de lecture (12 ; 112),
• disposé dans le substrat de lecture, et adapté à appliquer un signal électrique au détecteur thermique (50 ; 150) et au dispositif de compensation (30 ; 130) ;
**caractérisé en ce que** le transducteur thermométrique de compensation (60 ; 160) est :
• disposé entre le réflecteur (51 ; 171) et le substrat de lecture (10 ; 110), et
• situé en regard du réflecteur (51 ; 171) de manière à être optiquement insensible au rayonnement électromagnétique incident.

2. Système de détection (1, 100) selon la revendication 1, dans lequel le réflecteur (51 ; 171) recouvre le transducteur thermométrique de compensation (40 ; 140).

3. Système de détection (1, 100) selon la revendication 1 ou 2, dans lequel le transducteur thermométrique de compensation (40 ; 140) est au contact du substrat de lecture (10 ; 110) par le biais d'au moins une couche isolante (21 ; 121, 133) réalisée en un matériau diélectrique présentant une conductivité thermique sensiblement égale à celle du substrat de lecture.

4. Système de détection (1, 100) selon l'une quelconque des revendications 1 à 3, dans lequel le transducteur thermométrique de compensation (40 ; 140) est entouré, dans un plan parallèle au plan principal du substrat de lecture, par une couche isolante (32 ; 133) réalisée en un matériau diélectrique présentant une conductivité thermique sensiblement égale à celle du substrat de lecture.

5. Système de détection (100) selon la revendication 4, dans lequel le réflecteur (171) repose sur une couche isolante (32 ; 132) réalisée en un matériau diélectrique présentant une conductivité thermique sensiblement égale à celle du substrat de lecture et qui recouvre le transducteur thermométrique de compensation (140).

6. Système de détection (1, 100) selon l'une quelconque des revendications 1 à 5, dans lequel les transducteurs thermométriques de compensation (40 ; 140) et de détection (60 ; 160) sont structurellement identiques.

7. Système de détection (1, 100) selon la revendication 6, dans lequel les transducteurs thermométriques de compensation (140) et de détection (160) sont connectés au circuit de lecture (112) par l'intermédiaire de plots conducteurs (134) s'étendant de manière sensiblement orthogonale au plan principal du substrat de lecture,
∘ les plots conducteurs (157) de connexion du transducteur thermométrique de détection (160) étant sensiblement coaxiaux avec les plots conducteurs (134) de connexion du transducteur thermométrique de compensation (140),
∘ les plots conducteurs (157) de connexion du transducteur thermométrique de détection (160) étant connectés électriquement à des piliers d'ancrage (154) assurant une suspension de la membrane absorbante (153) par au moins un bras de connexion latérale (183.1, 183.2) s'étendant dans un plan parallèle au plan principal du substrat de lecture.

8. Système de détection (1, 100) selon la revendication 7, dans lequel les plots conducteurs (157) de connexion du transducteur thermométrique de détection (160) présentent chacun une hauteur sensiblement égale à celle du plot conducteur (134) coaxial de connexion du transducteur thermométrique de compensation (140).

9. Système de détection (1, 100) selon l'une quelconque des revendications 1 à 8, dans lequel les transducteurs thermométriques de compensation (140) et de détection (160) sont des transistors à effet de champ comportant chacun une portion semiconductrice (141 ; 161) formant une source (141.1 ; 161.1), un canal (141.2 ; 161.2) et un drain (141.3 ; 161.3), et une couche conductrice formant une grille (143 ; 163), laquelle est séparée du canal (141.2 ; 161.2) par une couche isolante formant un oxyde de grille (142 ; 162), chaque grille (143 ; 163) étant située, par rapport à la portion semiconductrice (141 ; 161) correspondante, du côté du substrat de lecture.

10. Système de détection (1, 100) selon la revendication 9, dans lequel les transducteurs thermométriques de compensation (140) et de détection (160) sont connectés au circuit de lecture (112) par l'intermédiaire de plots conducteurs (134 ; 157) s'étendant de manière sensiblement orthogonale au plan principal du substrat de lecture, et connectant chacun une source (141.1 ; 161.1), un drain (141.3 ; 161.3) ou une grille (143 ; 163).

11. Procédé de fabrication d'un système de détection (1) selon l'une quelconque des revendications 1 à 8, les transducteurs thermométriques de compensation (40) et de détection (60) étant des matériaux thermistances, comportant les étapes suivantes :
- réalisation d'un substrat de lecture (10) ;
- réalisation, à partir d'une face supérieure du substrat de lecture, du dispositif de compensation (30) ;
- réalisation, à partir d'une face supérieure du dispositif de compensation (30), du réflecteur (51) ;
- réalisation, à partir d'une face supérieure du réflecteur (51), de la membrane absorbante (53) du détecteur thermique (50).

12. Procédé de fabrication d'un système de détection (100) selon l'une quelconque des revendications 1 à 10, les transducteurs thermométriques de compensation (140) et de détection (160) étant des diodes à jonction pn ou pin ou des transistors à effet de champ, comportant les étapes suivantes :
- réalisation du substrat de lecture (110) ;
- réalisation d'un substrat fonctionnalisé (130) dit de compensation, comportant le transducteur thermométrique de compensation (140) ;
- fixation par collage du substrat fonctionnalisé de compensation (140) sur le substrat de lecture (110) ;
- réalisation d'un substrat fonctionnalisé (150) dit de détection, comportant le transducteur thermométrique de détection (160) ;
- fixation par collage du substrat fonctionnalisé de détection (160) sur la structure préalablement obtenue.

13. Procédé selon la revendication 12, dans lequel les substrats de lecture (110), de compensation (130), et de détection (150), sont fixés deux à deux, par collage mixte, au niveau de faces desdits substrats fonctionnalisés définies par au moins une surface d'un matériau diélectrique, et au moins une surface d'un matériau métallique.

14. Procédé de fabrication d'un système de détection (1, 100) selon l'une quelconque des revendications 1 à 8, le transducteur thermométrique de compensation étant un matériau thermistance, et le transducteur thermométrique de détection étant une diode à jonction pn ou pin ou un transistor à effet de champ, comportant les étapes suivantes :
- réalisation du substrat de lecture ;
- réalisation, à partir d'une face supérieure du substrat de lecture, du dispositif de compensation ;
- réalisation, à partir d'une face supérieure du dispositif de compensation, d'une couche intercalaire d'espacement optique comportant le réflecteur ;
- réalisation d'un substrat fonctionnalisé dit de détection, comportant le transducteur thermométrique de détection ;
- fixation par collage du substrat fonctionnalisé de détection sur la structure préalablement obtenue.

## Patentansprüche

1. System zur Detektion (1; 100) einer elektromagnetischen Strahlung, beinhaltend:
∘ Ein Substrat, der Lesung (10; 110) genannt;
∘ mindestens einen Wärmedetektor (50; 150), beinhaltend:
• Eine absorbierende Membran (53; 153) der elektromagnetischen Strahlung,
▪ thermisch gegenüber dem Lesungssubstrat (10; 110) isoliert, und
▪ einen thermometrischen Detektionswandler (60; 160) beinhaltend, ausgewählt aus einer Diode mit pn- oder pin-Übergang, einem Feldeffekttransistor oder einem Thermistormaterial;
• einen Reflektor (51; 171) der elektromagnetischen Strahlung,
▪ zwischen der absorbierenden Membran (53; 153) und dem Lesungssubstrat angeordnet;
∘ mindestens eine Kompensationsvorrichtung (30; 130), beinhaltend:
• Einen thermometrischen Kompensationswandler (40; 140), ausgewählt aus einer Diode mit pn- oder pin-Übergang, einem Feldeffekttransistor oder einem Thermistormaterial,
▪ in thermischem Kontakt mit dem Lesungssubstrat;
∘ eine Leseschaltung (12; 112),
• im Lesungssubstrat angeordnet und angepasst, um ein elektrisches Signal an den Wärmedetektor (50; 150) und die Kompensationsvorrichtung (30; 130) anzulegen;
**dadurch gekennzeichnet, dass** der thermometrische Kompensationswandler (60; 160):
• Zwischen dem Reflektor (51; 171) und dem Lesungssubstrat (10; 110) angeordnet ist, und
• gegenüberliegend vom Reflektor (51; 171) so positioniert ist, dass er optisch unempfindlich bezüglich einfallender elektromagnetischer Strahlung ist.

2. Detektionssystem (1, 100) nach Anspruch 1, wobei der Reflektor (51; 171) den thermometrischen Kompensationswandler (40; 140) bedeckt.

3. Detektionssystem (1, 100) nach Anspruch 1 oder 2, wobei der thermometrische Kompensationswandler (40; 140) mittels mindestens einer Isolierschicht (21; 121, 133) in Kontakt mit dem Lesungssubstrat (10; 110) steht, die aus einem dielektrischen Material gefertigt ist, das eine Wärmeleitfähigkeit aufweist, die im Wesentlichen der des Lesungssubstrats entspricht.

4. Detektionssystem (1, 100) nach einem der Ansprüche 1 bis 3, wobei der thermometrische Kompensationswandler (40; 140) in einer Ebene parallel zur Hauptebene des Lesungssubstrats von einer Isolierschicht (32; 133) umgeben ist, die aus einem dielektrischen Material gefertigt ist, das eine Wärmeleitfähigkeit aufweist, die im Wesentlichen der des Lesungssubstrats entspricht.

5. Detektionssystem (100) nach Anspruch 4, wobei der Reflektor (171) auf einer Isolierschicht (32; 132) ruht, die aus einem dielektrischen Material gefertigt ist, das eine Wärmeleitfähigkeit aufweist, die im Wesentlichen der des Lesungssubstrats entspricht, und den thermometrischen Kompensationswandler (140) bedeckt.

6. Detektionssystem (1, 100) nach einem der Ansprüche 1 bis 5, wobei die thermometrischen Wandler der Kompensation (40; 140) und der Detektion (60; 160) strukturell identisch sind.

7. Detektionssystem (1, 100) nach Anspruch 6, wobei die thermometrischen Wandler der Kompensation (140) und der Detektion (160) durch Leiterpads (134), die sich im Wesentlichen orthogonal zur Hauptebene des Lesungssubstrats erstrecken, mit der Leseschaltung (112) verbunden sind,
∘ die Leiterpads (157) der Verbindung des thermometrischen Detektionswandlers (160) im Wesentlichen koaxial zu den Leiterpads (134) der Verbindung des thermometrischen Kompensationswandlers (140) sind,
∘ die Leiterpads (157) der Verbindung des thermometrischen Detektionswandlers (160) elektrisch mit Ankersäulen (154) verbunden sind, die eine Abstützung der absorbierenden Membran (153) durch mindestens einen seitlichen Verbindungsarm (183.1, 183.2) gewährleisten, der sich in einer Ebene parallel zur Hauptebene des Lesungssubstrats erstreckt.

8. Detektionssystem (1, 100) nach Anspruch 7, wobei die Leiterpads (157) der Verbindung des thermometrischen Detektionswandlers (160) jeweils eine Höhe aufweisen, die im Wesentlichen der des koaxialen Leiterpads (134) der Verbindung des thermometrischen Kompensationswandler (140) entspricht.

9. Detektionssystem (1, 100) nach einem der Ansprüche 1 bis 8, wobei die thermometrischen Wandler der Kompensation (140) und der Detektion (160) Feldeffekttransistoren sind, die jeweils einen Halbleiterabschnitt (141; 161) beinhalten, der eine Source (141.1; 161.1), einen Kanal (141.2; 161.2) und einen Drain (141.3; 161.3) bildet, und eine leitende Schicht, die ein Gate (143; 163) bildet, das vom Kanal (141.2; 161.2) durch eine Isolierschicht getrennt ist, die ein Gateoxid (142; 162) bildet, wobei jedes Gate (143; 163), in Bezug auf den entsprechenden Halbleiterabschnitt (141; 161), auf der Seite des Lesungssubstrats positioniert ist.

10. Detektionssystem (1, 100) nach Anspruch 9, wobei die thermometrischen Wandler der Kompensation (140) und der Detektion (160) über Leiterpads (134; 157), die sich im Wesentlichen orthogonal zur Hauptebene des Lesungssubstrats erstrecken, mit der Leseschaltung (112) verbunden sind, und jeweils eine Source (141.1; 161.1), einen Drain (141.3; 161.3) oder ein Gate (143; 163) verbinden.

11. Verfahren zur Herstellung eines Detektionssystems (1) nach einem der Ansprüche 1 bis 8, wobei die thermometrischen Wandler der Kompensation (40) und der Detektion (60) Thermistormaterialien sind, die folgenden Schritte beinhaltend:
- Fertigung eines Lesungssubstrats (10);
- Fertigung, ausgehend von einer oberen Fläche des Lesungssubstrats, der Kompensationsvorrichtung (30);
- Fertigung, ausgehend von einer oberen Fläche der Kompensationsvorrichtung (30), des Reflektors (51);
- Fertigung, ausgehend von einer oberen Fläche des Reflektors (51), der absorbierenden Membran (53) des Wärmedetektors (50).

12. Verfahren zur Herstellung eines Detektionssystems (100) nach einem der Ansprüche 1 bis 10, wobei die thermometrischen Wandler der Kompensation (140) und Detektion (160) Dioden mit pn- oder pin-Übergang oder Feldeffekttransistoren sind, die folgenden Schritte beinhaltend:
- Fertigung des Lesungssubstrats (110);
- Fertigung eines funktionalisierten Substrats (130), der Kompensation genannt, den thermometrischen Kompensationswandler (140) beinhaltend;
- Fixierung durch Kleben des funktionalisierten Kompensationssubstrats (140) auf dem Lesungssubstrat (110);
- Fertigung eines funktionalisierten Substrats (150), der Detektion genannt, den thermometrischen Detektionswandler (160) beinhaltend;
- Fixierung durch Kleben des funktionalisierten Detektionssubstrats (160) auf der zuvor erhaltenen Struktur.

13. Verfahren nach Anspruch 12, wobei die Substrate der Lesung (110), der Kompensation (130) und der Detektion (150) zu zwei und zwei durch gemischtes Kleben im Bereich der Flächen der funktionalisierten Substrate fixiert sind, die durch mindestens eine Oberfläche eines dielektrischen Materials und mindestens eine Oberfläche eines metallischen Materials definiert sind.

14. Verfahren zur Herstellung eines Detektionssystems (1, 100) nach einem der Ansprüche 1 bis 8, wobei der thermometrische Kompensationswandler ein Thermistormaterial ist und der thermometrische Detektionswandler eine Diode mit pn- oder pin-Übergang oder ein Feldeffekttransistor ist, die folgenden Schritte beinhaltend:
- Fertigung des Lesungssubstrats;
- Fertigung, ausgehend von einer oberen Fläche des Lesungssubstrats, der Kompensationsvorrichtung;
- Fertigung, ausgehend von einer oberen Fläche der Kompensationsvorrichtung, einer optischen Abstandszwischenschicht, die den Reflektor beinhaltet;
- Fertigung eines funktionalisierten Substrats, der Detektion genannt, das den thermometrischen Detektionswandler beinhaltet;
- Fixierung durch Kleben des funktionalisierten Detektionssubstrats auf der zuvor erhaltenen Struktur.

## Claims

1. A system (1; 100) for detecting electromagnetic radiation, comprising:
∘ a substrate, called readout substrate (10; 110);
∘ at least one thermal detector (50; 150), comprising:
• an absorbent membrane (53; 153) for absorbing the electromagnetic radiation,
▪ thermally insulated from the readout substrate (10; 110), and
▪ comprising a thermometric detection transducer (60; 160) selected from among a p-n junction or PIN diode, a field-effect transistor, or a thermistor material;
• a reflector (51; 171) for reflecting the electromagnetic radiation,
▪ arranged between the absorbent membrane (53; 153) and the readout substrate;
∘ at least one compensation device (30; 130), comprising:
• a thermometric compensation transducer (40; 140)selected from among a p-n junction or PIN diode, a field-effect transistor, or a thermistor material,
▪ in thermal contact with the readout substrate;
∘ a readout circuit (12; 112),
• arranged in the readout substrate, and designed to apply an electrical signal to the thermal detector (50; 150) and to the compensation device (30; 130);
**characterized in that** the thermometric compensation transducer (60; 160) is:
• arranged between the reflector (51; 171) and the readout substrate (10; 110), and
• situated facing the reflector (51; 171) so as to be optically insensitive to the incident electromagnetic radiation.

2. The detection system (1, 100) as claimed in claim 1, wherein the reflector (51; 171) covers the thermometric compensation transducer (40; 140).

3. The detection system (1, 100) as claimed in claim 1 or 2, wherein the thermometric compensation transducer (40; 140) is in contact with the readout substrate (10; 110) through at least one insulating layer (21; 121, 133) made from a dielectric material having a thermal conductivity substantially equal to that of the readout substrate.

4. The detection system (1, 100) as claimed in any one of claims 1 to 3, wherein the thermometric compensation transducer (40; 140) is surrounded, in a plane parallel to the main plane of the readout substrate, by an insulating layer (32; 133) made from a dielectric material having a thermal conductivity substantially equal to that of the readout substrate.

5. The detection system (100) as claimed in claim 4, wherein the reflector (171) rests on an insulating layer (32; 132) made from a dielectric material having a thermal conductivity substantially equal to that of the readout substrate and that covers the thermometric compensation transducer (140).

6. The detection system (1, 100) as claimed in any one of claims 1 to 5, wherein the thermometric compensation (40; 140) and detection (60; 160) transducers are structurally identical.

7. The detection system (1, 100) as claimed in claim 6, wherein the thermometric compensation (140) and detection (160) transducers are connected to the readout circuit (112) via conductive pads (134) extending substantially orthogonally to the main plane of the readout substrate,
∘ the conductive pads (157) for connecting the thermometric detection transducer (160) being substantially coaxial with the conductive pads (134) for connecting the thermometric compensation transducer (140),
∘ the conductive pads (157) for connecting the thermometric detection transducer (160) being electrically connected to anchoring pillars (154) suspending the absorbent membrane (153) via at least one lateral connecting arm (183.1, 183.2) extending in a plane parallel to the main plane of the readout substrate.

8. The detection system (1, 100) as claimed in claim 7, wherein the conductive pads (157) for connecting the thermometric detection transducer (160) each have a height substantially equal to that of the coaxial conductive pad (134) for connecting the thermometric compensation transducer (140).

9. The detection system (1, 100) as claimed in any one of claims 1 to 8, wherein the thermometric compensation (140) and detection (160) transducers are field-effect transistors each comprising a semiconductor portion (141; 161) forming a source (141.1; 161.1), a channel (141.2; 161.2) and a drain (141.3; 161.3), and a conductive layer forming a gate (143; 163), which is separated from the channel (141.2; 161.2) by an insulating layer forming a gate oxide (142; 162), each gate (143; 163) being situated, with respect to the corresponding semiconductor portion (141; 161), on the side of the readout substrate.

10. The detection system (1, 100) as claimed in claim 9, wherein the thermometric compensation (140) and detection (160) transducers are connected to the readout circuit (112) via conductive pads (134; 157) extending substantially orthogonally to the main plane of the readout substrate, and each connecting a source (141.1; 161.1), a drain (141.3; 161.3) or a gate (143; 163).

11. A method for manufacturing a detection system (1) as claimed in any one of claims 1 to 8, the thermometric compensation (40) and detection (60) transducers being thermistor materials, comprising the following steps:
- producing a readout substrate (10);
- producing the compensation device (30), from an upper face of the readout substrate;
- producing the reflector (51), from an upper face of the compensation device (30);
- producing the absorbent membrane (53) of the thermal detector (50), from an upper face of the reflector (51).

12. A method for manufacturing a detection system (100) as claimed in any one of claims 1 to 10, the thermometric compensation (140) and detection (160) transducers being p-n junction or PIN diodes or field-effect transistors, comprising the following steps:
- producing the readout substrate (110);
- producing a functionalized substrate (130), called compensation substrate, comprising the thermometric compensation transducer (140);
- fastening the functionalized compensation substrate (140) to the readout substrate (110) by bonding;
- producing a functionalized substrate (150), called detection substrate, comprising the thermometric detection transducer (160);
- fastening the functionalized detection substrate (160) to the previously obtained structure by bonding.

13. The method as claimed in claim 12, wherein the readout (110), compensation (130) and detection (150) substrates are fastened in pairs, through mixed bonding, at faces of said functionalized substrates that are defined by at least one surface of a dielectric material, and at least one surface of a metal material.

14. A method for manufacturing a detection system (1, 100) as claimed in any one of claims 1 to 8, the thermometric compensation transducer being a thermistor material, and the thermometric detection transducer being a p-n junction or PIN diode or a field-effect transistor, comprising the following steps:
- producing the readout substrate;
- producing the compensation device, from an upper face of the readout substrate;
- producing an optical spacer interlayer comprising the reflector, from an upper face of the compensation device;
- producing a functionalized substrate, called detection substrate, comprising the thermometric detection transducer;
- fastening the functionalized detection substrate to the previously obtained structure by bonding.
